# EUROPÄISCHE PATENTSCHRIFT

(11) **EP 4 323 659 B1**
(45) Veröffentlichungstag und Bekanntmachung des Hinweises auf die Patenterteilung: **12.02.2025**
(21) Anmeldenummer: 22722485.4
(22) Anmeldetag: 12.04.2022
(51) Int. Cl.: F16C 17/10, F16C 33/20, F16C 41/00, B23Q 16/06

(54) **AXIAL-RADIAL-GLEITLAGER**
AXIAL-RADIAL SLIDING BEARING
PALIER LISSE AXIAL-RADIAL

(30) Priorität: 12.04.2021 DE 202021101947 U; 01.10.2021 DE 102021125527
(43) Veröffentlichungstag der Anmeldung: 21.02.2024
(73) Patentinhaber: igus GmbH, 51147 Köln (DE)
(72) Erfinder: SELZER, Ralf, 53797 Lohmar (DE); SZEPOKAT, David, 50679 Köln (DE)
(74) Vertreter: Lippert Stachow Patentanwälte Rechtsanwälte
(86) Internationale Anmeldenummer: PCT/EP2022/059753
(87) Internationale Veröffentlichungsnummer: WO 2022/218980

(56) Entgegenhaltungen:
- DE-U1- 202013 101 374
- FR-A1- 3 035 461

## Beschreibung

Die Erfindung betrifft ein Axial-Radial-Gleitlager, insbesondere ein Rundtischlager umfassend einen ersten Lagerring und einen zweiten Lagerring, wobei die Lagerringe gegeneinander um eine Lagerachse drehbar angeordnet sind und der zweite Lagerring einen im Wesentlichen U-förmigen Querschnitt bildet, um den ersten Lagerring zumindest abschnittsweise aufzunehmen, ferner umfassend Gleitelemente aus einem Polymermaterial, welche zwischen erstem und zweitem Lagerring angeordnet sind, um die Lagerringe axial und radial zu entkoppeln, wobei die Gleitelemente jeweils einen im Wesentlichen L-förmigen Querschnitt aufweisen mit einem Axialbereich, umfassend axiale Gleitflächen und einem Radialbereich, umfassend radiale Gleitflächen.

Derartige Axial-Radial-Gleitlager sind ausgebildet, um sowohl axiale als auch radiale Kräfte aufzunehmen und werden beispielsweise für Rundschalttische, Teilapparate, für die Gestaltung von CNC-Drehachsen und für die Lagerung von schwenkbaren Bildschirmen, etc. verwendet. Als Polymermaterial zur Herstellung der Gleitelemente kann ein tribologisch geeignetes Polymer eingesetzt werden, das in der Regel schmiermittelfrei angewendet werden kann.

Ein gattungsbildendes Axial-Radial-Gleitlager ist beispielsweise in der Gebrauchsmusterschrift DE 20 2013 101 374 U1 beschrieben. Die Vorteile derartiger herkömmlicher Gleitlager sind insbesondere in der geringen Reibung der Lagerringe zueinander, dem wartungsfreien Betrieb, der preisgünstigen Herstellung sowie der robusten Bauweise und der hohen Verschleißfestigkeit zu sehen. Daneben radialen und axialen Lasten auch Kippmomentbelastungen der Lagerstelle trotz geringer Baugröße sicher aufgenommen werden können, reduziert sich bei diesen herkömmlichen Axial-Radial-Gleitlagern der Aufwand und damit die Kosten für die Gestaltung von Anschlusskonstruktionen und den Einbau der Lager erheblich. Die Vielzahl dieser Vorteile hat zur Folge, dass die Verbreitung derartiger Polymer-Rundtischlager (PRT) auf den unterschiedlichsten Gebieten immer mehr zugenommen hat.

Weiterer Stand der Technik ist aus der FR 3 035 461 A1 bekannt.

Bei einer Mehrzahl von Anwendungen derartiger Gleitlager kann die Aufgabe bestehen, bei der Ausführung einer Drehbewegung der beiden Lagerringe zueinander immer wiederkehrend präzise eine vorgegebene relative Drehlage der beiden Lagerringe zueinander anzufahren und zu fixieren, beispielsweise bei der Verwendung auf einem Montagetisch.

Insofern liegt der vorliegenden Erfindung die Aufgabe zugrunde, ein herkömmliches Axial-Radial-Gleitlager so weiterzubilden, dass zuverlässig und reproduzierbar eine relative Drehlage der beiden Lagerringe des Gleitlagers zueinander angefahren werden kann ohne, dass hierzu ein hoher konstruktiver Zusatzaufwand ausgehend von einem herkömmlichen Axial-Radial-Gleitlager notwendig ist und ohne dass mit dieser zusätzlichen Funktionalität die Notwendigkeit eines erhöhten Bauraums für das Gleitlager einhergeht.

Diese Aufgabe löst die vorliegende Erfindung schon mit einem Axial-Radial-Gleitlager, umfassend die Merkmale von Anspruch 1. Das erfindungsgemäße Axial-Radial-Gleitlager weist einen ersten Lagerring und einen zweiten Lagerring auf, wobei die Lagerringe gegeneinander um eine Lagerachse drehbar angeordnet sind, und der zweite Lagerring einen im Wesentlichen U-förmigen Querschnitt bildet, um den ersten Lagerring zumindest abschnittsweise aufzunehmen, ferner umfassend Gleitelemente aus einem für tribologische Zwecke einsetzbaren Polymermaterial, welche zwischen erstem und zweitem Lagerring angeordnet sind, um die Lagerringe axial und radial zu entkoppeln, d.h. die Reibung der Lagerringe in axialer und radialer Richtung zueinander zu verringern, wobei die Gleitelemente jeweils einen im Wesentlichen L-förmigen Querschnitt aufweisen mit einem Axialbereich, umfassend axiale Gleitflächen und einem Radialbereich, umfassend radiale Gleitflächen. Das erfindungsgemäße Axial-Radial-Gleitlager zeichnet sich dadurch aus, dass zumindest einer der beiden Lagerringe einen Sitz für ein in diesem aufgenommenes und auslenkbares Rastelement aufweist, das kraftbeaufschlagt sein kann, und der andere der beiden Lagerringe zumindest eine dem Rastelement zugeordnete Rastausnehmung umfasst zur wenigstens abschnittsweisen Aufnahme des auslenkbaren Rastelements zur Bereitstellung einer lösbaren Verrastung bei einer vorgegebenen relativen Drehlage der beide Lagerringe zueinander.

Dem erfindungsgemäßen Axial-Radial-Gleitlager liegt die grundsätzliche Idee zugrunde, die relative Anordnung der beiden Lagerringe zueinander so zu gestalten, dass zumindest zwei Betriebssituationen bzw. Betriebslagen der beiden Lagerringe zueinander bereitgestellt werden können, namentlich eine Erste, bei welcher die beiden Lagerringe frei relativ zueinander um die Lagerachse drehbar angeordnet sind und zumindest eine Zweite, bei einer vorgegebenen relativen Drehlage von erstem und zweitem Lagerring zueinander, bei welcher die relative Bewegung der beiden Lagerringe zueinander blockiert ist, wobei jedoch durch Aufbringen eines vorgegebenen Lösemoments bzw. einer Lösekraft diese Blockade wieder gelöst bzw. aufgehoben werden kann. Erfindungsgemäß wird diese Bewegungsblockade der beiden Lagerringe zueinander durch eine lösbare Verrastung der beiden Lagerringe zueinander bereitgestellt. Durch das Vorsehen eines kraftbeaufschlagten Rastelementes an einem der beiden Lagerringe, das zur lösbaren Blockade der relativen Drehung der beiden Lagerringe zueinander mit einer zugeordneten Rastausnehmung an dem anderen Lagerring zusammenwirkt, kann die gewünschte Funktionalität bereitgestellt werden, ohne dass besondere konstruktive Gestaltungen erforderlich sind, die ansonsten das Bauvolumen des Lagers erhöhen würden. Die beschriebene Verrastung der beiden Lagerringe zueinander erfolgt nach der Einstellung der zumindest einen vorgegebenen relativen Drehlage zwischen den beiden Lagerringen, bei der das Rastelement aufgrund der Kraftbeaufschlagung in die zumindest eine Rastausnehmung bewegt wird und damit in Eingriff mit der zugeordneten Rastausnehmung gerät.

Die Bezeichnung von Flächen des erfindungsgemäßen Gleitlagers bzw. von dessen Bauteilen als axiale Flächen bzw. radiale Flächen meint Flächen, die im Wesentlichen senkrecht zur axialen Richtung bzw. radialen Richtung des Lagers liegen. L-förmig in Bezug auf die Form der Gleitelemente kann eine Gestaltung meinen, bei welcher die jeweiligen Gleitelemente axiale und radiale Gleitflächen aufweisen, die etwa 90 ° zueinander orientiert sein können. Dabei kann das Erstreckungsmaß der axialen Gleitflächen in radialer Richtung größer sein als das Erstreckungsmaß der radialen Gleitflächen in axialer Richtung des Lagers. Die Angabe "L-förmige" Gleitelemente umfasst jedoch auch Ausführungsformen, bei welchen das Erstreckungsmaß der axialen Gleitflächen in radialer Richtung kleiner oder gleich ist als das bzw. zum Erstreckungsmaß der radialen Gleitflächen in axialer Richtung des Lagers.

Weiterbildungen der Erfindung sowie zusätzliche erfindungsgemäße Merkmale sind in der allgemeinen Beschreibung, den Figuren, der Figurenbeschreibung sowie den Unteransprüchen angegeben.

Zweckmäßigerweise kann vorgesehen sein, dass die an beiden Lagerringen vorgesehenen komplementären Rastmittel an sich gegenüberliegenden Flächen der beiden Lagerringe angeordnet sind, sodass sie zum lösbaren Blockieren der relativen Drehbewegung der beiden Lagerringe zueinander ausgebildet sind.

Erfindungsgemäß können die zum Zusammenwirken und komplementär ausgebildeten Ausgestaltungen Rastelement und Rastausnehmung an einander zugewandten Grenzflächen der beiden Lagerringe angeordnet sein. In einer zweckmäßigen Ausführungsform kann vorgesehen sein, dass das Rastelement und die zumindest eine Rastausnehmung an jeweils aneinander zugewandten Radialflächen des einen und des anderen Lagerrings angeordnet sind. Dabei kann vorgesehen sein, dass das im Sitz des einen Lagerrings angeordnete Rastelement in radialer Richtung kraftbeaufschlagt und auslenkbar angeordnet ist zur Bereitstellung einer Verrastung der beiden Lagerringe zueinander in radialer Richtung beim Einstellen einer vorgegebenen relativen Drehlage der beiden Lagerringe zueinander. Es kann jedoch auch vorgesehen sein, dass das Rastelement und die zumindest eine Rastausnehmung an jeweils einander zugewandten Axialflächen des einen und des anderen Lagerrings angeordnet sind und dass das im Sitz des einen Lagerrings angeordnete Rastelement in axialer Richtung kraftbeaufschlagt und auslenkbar ist. Weiterhin ist es auch möglich, dass ein Rastelement und zumindest eine zugeordnete Rastausnehmung an jeweils aneinander zugewandten Radialflächen des einen und des anderen Lagerrings angeordnet sind und gleichzeitig ein weiteres Rastelement und zumindest eine diesem zugeordnete Rastausnehmung an jeweils aneinander zugewandten Axialflächen des einen und des anderen Lagerrings angeordnet sind, sodass sowohl an den einander zugewandten Axialflächen als auch an den einander zugewandten Radialflächen eine Verrastung der beiden Lagerringe zueinander erfolgen kann.

Zweckmäßigerweise kann vorgesehen sein, dass der Sitzbereich zur Aufnahme des kraftbeaufschlagten und auslenkbaren Rastelements an einem der Lagerringe Gleitelement-frei ausgebildet ist, um die gewünschte Verrastung bereitzustellen. Es kann vorgesehen sein, im Bereich des Rastelementsitzes an dem einen der beiden Lagerringe an der Axialfläche keines bzw. keinen Abschnitt der L-förmigen Gleitelemente vorzusehen, sondern zumindest ein anderes Gleitelement, das sich allein in der Axialfläche erstreckt bzw. allein eine Axialfläche bereitstellt, derart dass die radiale Auslenkung des Rastelements bei der Verrastung durch dieses Gleitelement nicht behindert ist. Insbesondere kann vorgesehen sein, dass im Bereich des Sitzes des Rastelements an der Radialfläche der einen der beiden Lagerringe kein Gleitelement bzw. kein Abschnitt eines Gleitelements angeordnet ist.

Die Gestaltung des erfindungsgemäßen Lagers kann derart ausgeführt sein, dass das Lösemoment zur Aufhebung der Verrastung der beiden Lagerringe zueinander durch Aufbringen eines vorgegebenen Drehmoments auf einen der Lagerringe erzeugbar ist während der andere Lagerring ortsfest gehalten ist, wobei dieses vorgegebene Drehmoment eine Drehmomentschwelle darstellt, ab welcher die Verrastung lösbar ist. Hierzu kann das Rastelement mit einer entsprechenden gekrümmten Rastfläche ausgebildet sein. Zweckmäßigerweise kann dabei vorgesehen sein, dass das Rastelement zumindest abschnittsweise eine kugel- oder zylinderförmige Rastfläche aufweist, die in einer Raststellung bzw. Rastposition des Rastelements zu der zumindest einen zugeordneten Rastausnehmung mit einer komplementär ausgebildeten Rastfläche dieser Rastausnehmung korrespondiert. Die Angabe Rastfläche meint insofern Anlagefläche des Rastelements bzw. der zugeordneten Rastausnehmung. Durch die beschriebenen gekrümmten Ausbildungen der Rastflächen bzw. Anlageflächen, kann die gewünschte Lösbarkeit der Verrastung auf einfache Weise bereitgestellt werden. Durch eine entsprechende Gestaltung der Rastflächen des Rastelementes und der Rastflächen der dem Rastelement zugeordneten Rastausnehmung kann vorgesehen sein, dass das Lösemoment abhängig von der Drehrichtung der beiden Lagerringe zueinander unterschiedlich eingestellt ist, was bei bestimmten Anwendungen zweckmäßig sein kann.

Zur Gestaltung des zweiten Lagerrings mit im Wesentlichen U-förmigem Querschnitt kann vorgesehen sein, dass dieser zwei axial beabstandete Ringabschnitte aufweist, die durch einen Axialflansch verbunden sind zur Gestaltung einer Aufnahme, in welcher der erste Lagerring zumindest abschnittsweise zwischen diesen beiden axial beabstandeten Ringabschnitten des zweiten Lagerrings angeordnet ist. Je nach Ausführungsform kann der Axialflansch radial innen oder radial außen zu den beiden axial beabstandeten, in der Regel koaxial ausgerichteten, Ringabschnitten angeordnet sein. Anwendungsbedingt sind Ausführungsformen besonders zweckmäßig, bei welchen der Axialflansch des zweiten Lagerrings radial innen zu den beiden axial beabstandeten Ringabschnitten angeordnet ist, sodass die äußere Radialfläche des abschnittsweise vom zweiten Lagerring aufgenommenen ersten Lagerrings freiliegt und eine Funktionsfläche umfassen kann, beispielsweise eine Funktionsfläche eines Zahnrades.

Erfindungsgemäß kann das Rastelement ein- oder mehrstückig ausgebildet sein. Insbesondere kann dieses einstückig als Stiftelement, beispielsweise als zylindrisches Stiftelement ausgestaltet sein. Dabei kann die Länge des Rastelements, das mit einer zugeordneten Rastausnehmung am anderen Lagerring korrespondiert, eingestellt sein, um ein vorgegebenes Lösedrehmoment festzulegen, bei welchem eine eingestellt Rastposition zwischen den beiden Lagerringen des erfindungsgemäßen Axial-Radial-Gleitlagers gelöst werden kann. In solchen Ausführungsformen, bei welchen das Rastelement als zylindrisches Stiftelement ausgebildet sein kann, kann die zugeordnete Rastausnehmung einem Teilvolumen des Zylindervolumens des Stiftelementes entsprechen, wobei das Teilvolumen ein im Wesentlichen gleiches Erstreckungsmaß in axialer Richtung des Lagers wie das zylindrische Rastelement aufweisen kann.

Es kann vorgesehen sein, dass die Längserstreckung (axiale Erstreckung) des Rastelements mehr als die Hälfte des axialen Maßes des Lagerrings mit der geringsten axialen Erstreckung beträgt. In einer besonders zweckmäßigen Ausführungsform kann vorgesehen sein, dass die axiale Erstreckung des Rastelements im Wesentlichen der axialen Erstreckung des radialen Flansches des zweiten Lagerrings entspricht, sodass über die gesamte axiale Erstreckung des radialen Flansches die Verrastung der beiden Lagerringe bereitgestellt werden kann. Hierzu kann vorgesehen sein, dass die axiale Erstreckung der zugeordnete Rastausnehmung dem axialen Maß des Rastelements entspricht, sodass über dessen gesamte Erstreckung die beschriebene Rastwirkung zwischen Rastelement und Rastausnehmung vorliegt nach der Einstellung einer vorgegebenen relativen Drehlage zwischen den beiden Lagerringen, bei welcher das kraftbeaufschlagte Rastelement in Eingriff mit der zugeordneten Rastausnehmung gerät.

Zur Bereitstellung einer Kraftbeaufschlagung auf das Rastelement kann beispielsweise ein Klemmelement, insbesondere in Form eines Schraubelements vorgesehen sein, dass auf das insbesondere elastisch verformbare Rastelement drückt und eine elastische Reaktionskraft erzeugt, mit welcher das Rastelement beim Vorliegen einer vorgegebenen relativen Drehlage der beiden Lagerringe zueinander in die zugeordnete Rastausnehmung zur Verrastung eintaucht.

In einer anderen Ausführungsform kann eine Federeinrichtung, insbesondere in Form einer Spiralfeder vorgesehen sein, die in einer Bohrung, beispielsweise einer radialen Bohrung, des einen Lagerrings angeordnet sein kann und zwischen dem Rastelement und einem radialen Anschlagselement wie einer Schraube eingespannt ist. Vorzugsweise kann dabei vorgesehen sein, dass die Längsachse der Spiralfeder etwa senkrecht zu einer Längsachse des Rastelements orientiert ist.

Um insbesondere bei der Gestaltung eines Montagetisches eine Mehrzahl von relativen Drehpositionen der beiden Lagerringe zueinander und damit eine Mehrzahl von Montagepositionen bereitzustellen, kann zweckmäßigerweise vorgesehen sein, dass der andere der beiden Lagerringe eine Mehrzahl von umfänglich zueinander beabstandeten Rastausnehmungen aufweist zur sukzessiven Aufnahme des Rastelements bei einer Drehung der beiden Lagerringe zueinander.

Um einen möglichst verschleißfreien Betrieb des erfindungsgemäßen Axial-Radial-Gleitlagers bereitzustellen kann zweckmäßigerweise vorgesehen sein, dass der Sitz für das Rastelement an dem einen der beiden Lagerringe zum im Wesentlichen vollständigen Aufnehmen des Rastelements in relativen Betriebsstellungen bzw. Betriebslagen der beiden Lagerringe zueinander außerhalb einer Rastposition ausgebildet ist. Ferner kann durch diese konstruktive Gestaltung eine möglichst spielfreie Anordnung der beiden Lagerringe zueinander bereitgestellt werden.

Grundsätzlich kann die Anordnung des Sitzes des Rastelements an dem zweiten Lagerring oder dem ersten Lagerring vorgesehen sein und in entsprechender Weise die Anordnung der zugeordneten zumindest einen Rastausnehmung an dem zweiten Lagerring oder dem ersten Lagerring. In solchen Ausführungsformen, bei welchen der Axialflansch des zweiten Lagerrings radial innen zum Verbinden der beiden axial beabstandeten Ringabschnitte vorgesehen ist, kann zweckmäßigerweise die zumindest eine Rastausnehmung am zweiten Lagerring, insbesondere am Axialflansch des zweiten Lagerrings und der Sitz des Rastelements an dem ersten Lagerring angeordnet sein. Diese Ausführungsform weist insbesondere den Vorteil auf, dass das Element zur Kraftbeaufschlagung auf das Rastelement von radial außen zugänglich ist, was eine eventuelle Wartung des Lagers erleichtern kann.

Bei der Gestaltung des erfindungsgemäßen Gleitlagers kann vorgesehen sein, dass zur Aufhebung der Verrastung der beiden Lagerringe zueinander diese nicht durch Aufbringen eines vorgegebenen Drehmoments auf einen der Lagerringe getrennt werden, sondern durch das Vorsehen und das Betätigen einer entsprechenden Betätigungsvorrichtung, mit welcher das Rastelement außer Eingriff mit der zumindest einen Rastausnehmung bringbar ist. Dabei kann die Betätigungsvorrichtung an dem einen der beiden Lagerringe angeordnet sein, wobei sie einen zu diesem Lagerring bewegbaren Betätigungsabschnitt aufweisen kann, der in Wirkverbindung zum Rastelement steht. Insbesondere kann vorgesehen sein, dass der Betätigungsabschnitt bewegungsgekoppelt zum Rastelement angeordnet ist, wobei diese Bewegungskopplung in der Art einer Kopplung in Bezug auf eine lineare Bewegung von Betätigungsabschnitt und Rastelement im Verhältnis 1:1 realisiert sein kann, jedoch nicht sein muss. Stattdessen kann in der Bewegungskopplung auch eine Untersetzung oder Übersetzung der Bewegung, gegebenenfalls auch mit einer Richtungsänderung zwischen Betätigungsabschnitt und Rastelement vorgesehen und ausgebildet sein.

Zweckmäßigerweise kann vorgesehen sein, dass die Verrastung durch in Eingriff bringen des Rastelementes mit der zumindest einen zugeordneten Rastausnehmung einen solchen Formschluss zwischen erstem und zweitem Lagerring bereitstellt, dass dieser ohne Betätigung der Betätigungsvorrichtung auch beim Aufbringen eines hohen Drehmomentes auf einen der Lagerringe nicht zerstörungsfrei gelöst werden kann. Zweckmäßigerweise kann dabei vorgesehen sein, dass das Rastelement im verrasteten Zustand über eine vorgegebene radiale Erstreckung in die zumindest eine zugeordnete Rastausnehmung eingreift und einander zugeordneten Rastflächen am Rastelement sowie der Rastausnehmung so ausgebildet sind, dass beim Einwirken eines Drehmomentes auf einen der Lagerringe keine bzw. nur eine geringe Kraftkomponente auf das Rastelement erzeugbar ist, die das Rastelement entgegen der Kraftbeaufschlagung aus der Rastausnehmung herausdrückt. Beispielsweise kann in einer Ausführungsform vorgesehen sein, dass die zumindest eine Rastausnehmung durch ebene Flächen gebildet ist, während das Rastelement im Bereich des Eingriffs mit der Rastausnehmung ebene Grenzflächen aufweist. In einer Ausführungsform kann dabei auch vorgesehen sein, dass das Rastelement zylinderförmig ausgebildet ist, wobei die Zylinderachse insbesondere radial zu dem einen der Lagerringe orientiert sein kann, an welchem der Sitz des Rastelementes angeordnet ist.

Auch bei der Ausführungsform des erfindungsgemäßen Axial-Radial-Gleitlagers, die eine beschriebene Betätigungsvorrichtung aufweist, kann zur Gestaltung des zweiten Lagerrings mit im Wesentlichen U-förmigem Querschnitt vorgesehen sein, dass dieser zwei axial beabstandete Ringabschnitte aufweist, die durch einen Axialflansch verbunden sind, zur Gestaltung einer Aufnahme, in welcher der erste Lagerring zumindest abschnittsweise zwischen diesen beiden axial beabstandeten Ringabschnitten des zweiten Lagerrings angeordnet ist. Zweckmäßigerweise kann vorgesehen sein, dass der Axialflansch des zweiten Lagerrings radial innen zu den beiden axial beabstandeten Ringabschnitten angeordnet ist, sodass die äußere Radialfläche des abschnittsweise vom zweiten Lagerring aufgenommenen ersten Lagerrings freiliegt und eine Funktionsfläche aufweisen kann, an der insbesondere die Betätigungsvorrichtung angeordnet sein kann, was die Zugänglichkeit des Betätigungsabschnittes der Betätigungsvorrichtung erleichtert.

Allgemein bezeichnet die Angabe "Betätigungsabschnitt" der Betätigungsvorrichtung einen Abschnitt, an welchem ein Nutzer manuell oder ein steuerbarer Stellantrieb der Betätigungsvorrichtung angreift, um insbesondere die Verrastung von Rastelement und zugeordneter Rastausnehmung zu lösen, wobei der Betätigungsabschnitt hierzu zu dem einen der beiden Lagerringen radial auslenkbar angeordnet sein kann.

In einer besonders zweckmäßigen Ausführungsform kann vorgesehen sein, dass zwischen den in Wirkverbindung stehenden, insbesondere bewegungsgekoppelten Rastelement und Betätigungsabschnitt ein Kraftübertragungselement angeordnet ist, beispielsweise ein Zug- und/oder Druckmittel wie ein Bowdenzug oder ein stabförmiges Element. Beispielsweise kann durch den Einsatz eines solchen Kraftübertragungselementes eine Betätigung der Betätigungsvorrichtung örtlich entfernt zum erfindungsgemäßen Axial-Radial-Gleitlager erfolgen. In einer besonders einfach gestalteten Ausführungsform kann auch vorgesehen sein, dass Rastelement und Betätigungsabschnitt mit einem eventuell dazwischen liegenden Kraftübertragungselement wie einem Stababschnitt integral hergestellt, insbesondere einstückig, ausgebildet sind.

Beispielsweise kann das integrale Bauteil als stabförmiges Element ausgebildet sein, dass an einem Ende einen Betätigungsabschnitt und am anderen Ende das Rastelement bereitstellt. Insofern ist in der vorliegenden Anmeldung die Angabe "Element" breit zu verstehen und kann auch einen Abschnitt eines Bauteils bezeichnen. Ferner können mehrere solcher Elemente oder Abschnitte integral als einzelnes Bauteil ausgebildet sein.

Zur Kraftbeaufschlagung des Rastelements kann bei der Ausführungsform eines erfindungsgemäßen Axial-Radial-Gleitlagers, das eine solche Betätigungsvorrichtung umfasst, das Rastelement federbelastet angeordnet sein, derart, dass das Rastelement nach Einstellung einer vorgegebenen Drehposition der beiden Lagerringe zueinander in die zumindest eine Rastausnehmung einrastet. Insbesondere kann die Betätigungsvorrichtung eine Federeinrichtung aufweisen, z.B. in Form einer Spiralfeder, die direkt oder indirekt auf das Rastelement wirkt und sich an einem zu dem einen der Lagerringe feststehenden Abschnitt abstützt, sodass das Rastelement beim Vorliegen einer vorgegebenen relativen Drehlage der beiden Lagerringe zueinander in eine zugeordnete Rastausnehmung zur Verrastung eintaucht. Diese federelastische Vorspannung des Rastelements kann aufgrund der Wirkverbindung zwischen Betätigungsabschnitt und Rastelement auch durch eine entsprechende, am Betätigungsabschnitt und/oder am zwischenliegenden Kraftübertragungselement angreifende Federeinrichtung realisiert sein.

Auch bei der Gestaltung einer Ausführungsform eines erfindungsgemäßen Axial-Radial-Gleitlagers, das eine Betätigungsvorrichtung zur Betätigung des Rastelementes aufweist, kann zweckmäßigerweise vorgesehen sein, dass zur Bereitstellung eines Montagetisches eine Mehrzahl von relativen Drehpositionen der beiden Lagerringe zueinander und damit eine Mehrzahl von Montagepositionen dadurch bereitgestellt ist, dass der andere der beiden Lagerringe eine Mehrzahl von umfänglich zueinander beabstandeten Rastausnehmungen aufweist zur sukzessiven Aufnahme des Rastelementes bei einer Drehung der beiden Lagerringe zueinander.

Um zu vermeiden, dass nach dem Lösen der Verrastung der beiden Lagerringe und dem nachfolgenden relativen Drehen der Lagerringe zueinander, insbesondere zur Einstellung einer weiteren Montageposition, das Rastelement nach dem Entfernen einer Betätigungskraft am Betätigungsabschnitt gegen die Kraftbeaufschlagung auf das Rastelement an einer radialen Fläche des anderen Lagerrings schleift, kann zweckmäßigerweise vorgesehen sein, dass die Betätigungsvorrichtung zum Arretieren einer Betriebsstellung eingerichtet und ausgebildet ist, in welcher eine Verrastung des Rastelementes in der zumindest einen Rastausnehmung gelöst ist, d.h., der Eingriff des Rastelements in die zumindest eine zugeordnete Rastausnehmung durch Zurückziehen des Rastelementes aus der Rastausnehmung aufgehoben ist. Diese Arretierung kann beispielsweise kraftschlüssig erfolgen, z. B. mittels einer Verklemmung des Rastelementes, des mit dem Rastelement in Wirkverbindung stehenden Betätigungsabschnittes und/oder eines zwischen diesen angeordneten Kraftübertragungselementes bzw. -abschnittes. In einer anderen Ausführungsform kann auch vorgesehen sein, dass die Betätigungsvorrichtung zur formschlüssigen Arretierung einer Betriebsstellung eingerichtet und ausgebildet ist. Beispielsweise kann vorgesehen sein, dass der Betätigungsabschnitt, das Rastelement und/oder ein zwischen diesen angeordneten Kraftübertragungselementes bzw. -abschnittes ausgehend von einer Raststellung des Rastelementes zum Lösen der Verrastung über eine vorgegebene Streckenschwelle in radialer Richtung relativ zu dem einen der beiden Lagerringe zwangsgeführt bewegbar angeordnet ist und nach Überschreiten der Streckenschwelle um eine radiale Richtung drehbar angeordnet ist zur Einstellung eines radialen Formschlusses zwischen Betätigungsabschnitt, Rastelement und/oder einem zwischen diesen angeordnetem Kraftübertragungselementes bzw. -abschnittes und dem anderen der beiden Lagerringe.

In einer besonders zweckmäßigen Ausführungsform kann vorgesehen sein, dass die Betätigungsvorrichtung einen insbesondere steuerbar ausgebildeten Stellantrieb aufweist, der zur Bereitstellung einer Betätigungskraft bzw. eines Betätigungsmoments ausgebildet ist, insbesondere derart, dass eine manuelle Betätigung entfallen kann, was die Handhabung des erfindungsgemäßen Gleitlagers erleichtert. Ein solcher Stellantrieb kann ein elektrischer, pneumatischer oder hydraulischer Stellantrieb sein, wobei ein solcher Stellantrieb auf dem Gebiet auch als Verstellaggregat bezeichnet wird.

Es sei bemerkt, dass in solchen Ausführungsformen, bei welchen die Betätigungsvorrichtung des Gleitlagers ein ansteuerbares Verstellaggregat aufweist, das in dem Sitz aufgenommene Rastelement nicht notwendigerweise kraftbeaufschlagt angeordnet sein muss, insbesondere in solchen Ausführungsformen, bei welchen das Verstellaggregat selbsthemmend ausgebildet ist. Ein solches Gleitlager kann insofern wie eines der vorstehend beschriebenen Gleitlagerausgebildet sein, mit Ausnahme des Umstandes, dass das Rastelement in einer verrasteten Betriebsstellung und/oder in einer unverrasteten Betriebsstellung nicht kraftbeaufschlagt, d.h. kräftefrei angeordnet ist, wobei diese Betriebsstellung durch das Verstellaggregat gehalten bzw. fixiert sein kann.

Das Verstellaggregat kann ausgebildet sein, ein Schubrohr linear aus- oder einzufahren, insbesondere als Elektrozylinder, Pneumatikzylinder oder Hydraulikzylinder. Vorzugsweise kann vorgesehen sein, dass ein solches Verstellaggregat abtriebsseitig mit dem Betätigungsabschnitt der Betätigungsvorrichtung bewegungsgekoppelt, insbesondere mit diesem zum linearen Bewegen des Betätigungsabschnittes verbunden ist oder dass der Betätigungsabschnitt ein integraler Bestandteil des Verstellaggregats ist. Die Verwendung eines Elektrozylinders, der insbesondere einen Linearantrieb umfassen kann mit einem Motor und mit einer durch diesen angetriebenen Spindel, ist kompakt aufbaubar und erlaubt eine einfache Integration in die erfindungsgemäße Anordnung des ersten und zweiten Lagerings zur Gestaltung eines erfindungsgemäßen Axial-Radial-Gleitlagers.

Zweckmäßigerweise kann vorgesehen sein, dass der Stellantrieb bzw. das Verstellaggregat zur Einstellung von zumindest zwei Betriebsstellungen der Lagerringe zueinander ausgebildet ist, namentlich einer verrasteten Betriebsstellung, bei welcher die beiden Lagerringe zueinander dadurch verrastet sind, dass das Rastelement in eine dem Rastelement zugeordnete Rastausnehmung eingreift und einer gelösten Betriebsstellung, bei welcher die beiden Lagerringe zueinander unverrastet dadurch angeordnet sind, dass das Rastelement in keine zugeordnete Rastausnehmung eingreift. Ein solcher Stellantrieb bzw. ein solches Stellaggregat kann steuerbar ausgebildet sein, beispielsweise dadurch, dass der Nutzer ein insbesondere elektrisches Steuersignal an den Stellantrieb bzw. das Verstellaggregat verursacht und damit veranlasst, dass der Stellantrieb bzw. das Verstellaggregat seine Betriebsstellung ändert, insbesondere zum Verrasten oder zum Lösen der Verrastung der beiden Lagerringe zueinander.

In einer besonders zweckmäßigen Ausführungsform kann auch vorgesehen sein, dass das erfindungsgemäße Axial-Radial-Gleitlager vorbereitet ist, um einen nutzerseitig ausgewählten Stellantrieb an die Betätigungsvorrichtung des erfindungsgemäßen Axial-Radial-Gleitlagers anzuschließen. Hierzu kann z.B. vorgesehen sein, dass der Betätigungsabschnitt der Betätigungsvorrichtung eine mechanische Kupplungseinrichtung wie ein Bolzengewinde oder ein Muttergewinde aufweist zur Ankopplung an ein Stellaggregat, dass ausgangsseitig mit einer komplementär ausgebildeten Kupplungseinrichtung, d.h. hier einem Muttergewinde oder einem Bolzengewinde ausgebildet sein kann und mit der Kupplungseinrichtung der Betätigungsvorrichtung koppelbar ist.

Das Einstellen bzw. Lösen einer Verrastung der beiden Lagerringe zueinander bzw. des Rastelements in einer zugeordneten Rastausnehmung kann im Laufe des Betriebs des Gleitlagers an einander zugeordneten Rastflächen zu einem Verschleiß führen, der nach einer vorgegebenen Betriebsdauer eine Wartung bzw. einen Austausch vorgegebener Bauteile notwendig macht. Zu diesem Zweck kann das erfindungsgemäße Axial-Radial-Gleitlager eine Überwachungseinrichtung zur Erfassung von Verrastungs- und/oder NichtVerrastungszuständen des Axial-Radial-Gleitlagers aufweisen. Diese Überwachungseinrichtung kann insbesondere in die Betätigungsvorrichtung bzw. in den Stellantrieb bzw. das Verstellaggregat integriert sein. Die Überwachungseinrichtung kann beispielsweise einen elektrischen Kontakt umfassen, der insbesondere mit dem Betätigungsabschnitt bewegungsgekoppelt sein kann und beispielsweise so eingerichtet und angeordnet sein, dass das Auslösen des Kontaktes eine sichere Verrastung der beiden Elemente zueinander anzeigt. Beispielsweise kann der elektrische Kontakt einen feststehenden Abschnitt aufweisen und einen mit dem Betätigungsabschnitt bewegungsgekoppelten Abschnitt, wobei die beiden Abschnitte des Kontaktes durch die Bewegung des Betätigungsabschnittes bis zur Einstellung eines elektrischen Kontaktes aufeinander zu bewegbar angeordnet sind.

In einer Ausführungsform kann auch vorgesehen sein, dass die Überwachungseinrichtung eine Zähleinrichtung zur Ermittlung der Anzahl von im Betrieb eingestellter Verrastungs-/NichtVerrastungszuständen, um beispielsweise darüber eine Verschleißanzeige abzuleiten. Ferner kann vorgesehen sein, dass die Überwachungseinrichtung eine Speichereinrichtung zum Speichern der ermittelten Anzahl von Verrastungs-/NichtVerrastungszuständen umfasst, der beispielsweise durch eine externe Steuereinrichtung auslesbar ist zur Abschätzung eines Verschleißzustandes und/oder zur Festlegung eines Wartungsintervalls.

Zweckmäßigerweise können die Gleitelemente als Spritzgussteil ausgebildet sein, wobei zwischen den radialen und axialen Gleitflächen eine Materialverdünnung in der Art eines Filmscharniers vorgesehen sein kann zur Abwinklung der radialen zu den axialen Gleitflächen um ca. 90°, sodass mit einem einzelnen Gleitelement sowohl eine radiale als auch eine axiale Gleitfläche des erfindungsgemäßen Axial-Radial-Gleitlagers bereitgestellt ist.

Um insbesondere den Zusammenbau des erfindungsgemäßen Gleitlagers zu erleichtern, kann zweckmäßigerweise vorgesehen sein, dass ein einzelnes Gleitelement im Bereich seiner axialen Gleitfläche eine Mehrzahl von in Einbaulage, d.h. im zusammengesetzten Zustand des Lagers, im Wesentlichen lückenfrei angeordneten und umfänglich aufeinanderfolgenden erste Sektoren umfasst, wobei diese Sektoren beispielsweise trapezförmig ausgebildet sein können. Ferner kann vorgesehen sein, dass das Gleitelement im Bereich seiner radialen Gleitfläche eine Mehrzahl von zueinander umfänglich beabstandet angeordneten und umfänglich aufeinanderfolgenden Sektoren umfasst, derart dass das jeweilige Gleitelement kreisförmig so angeordnet werden kann, dass die ersten Sektoren zwischen sich gegenüberliegenden axialen Grenzflächen des ersten und des zweiten Lagerrings und die zweiten Sektoren zwischen den sich gegenüberliegenden radialen Grenzflächen des ersten und des zweiten Lagerrings angeordnet sind. Besonders zweckmäßig kann dabei vorgesehen sein, dass zumindest zwei solcher Gleitelemente umfasst sind und so angeordnet sind, dass sie in Bezug auf ihre axiale Gleitfläche axial um etwa das axiale Maß des ersten Lagerrings zueinander versetzt und umfänglich zueinander um etwa das halbe Umfangsmaß der ersten Sektoren versetzt angeordnet sind. Damit kann erreicht werden, dass radial verlaufende Grenzen zwischen ersten Sektoren und radial verlaufende Grenzen zwischen den zweiten Sektoren der Gleitelemente nicht umfänglich übereinander liegen, sondern versetzt zueinander angeordnet sind, was die Belastbarkeit des erfindungsgemäßen Axial-Radial-Gleitlagers erhöhen kann.

Die Erfindung wird im Folgenden durch das Beschreiben einer Ausführungsform nebst Abwandlungen unter Bezugnahme auf die beiliegenden Zeichnungen erläutert, wobei
- Figur 1: in einer perspektivischen Aufsicht ein erfindungsgemäß gestaltetes Axial-Radial-Gleitlager,
- Figur 2: das in Figur 1 gezeigte erfindungsgemäße Gleitlager in einem Längsschnitt
- Figur 3: das erfindungsgemäße Lager der Figur 1 in einer Aufsicht mit einer Teilentfernung des zweiten Lagerrings,
- Figur 4: den zweiten Lagerring des erfindungsgemäßen Gleitlagers der Figur 1 in einer perspektivischen Einzelansicht,
- Figur 5: den ersten Lagerring des erfindungsgemäßen Gleitlagers der Figur 1 in einer perspektivischen Einzelansicht,
- Figur 6: eine Teilansicht der Gleitelemente des erfindungsgemäßen Gleitlagers der Figur 1 in einer perspektivischen Ansicht,
- Figur 7: in einer perspektivischen Ansicht ein erfindungsgemäß gestaltetes Axial-Radial-Gleitlager einer zweiten Ausführungsform,
- Figur 8: das in Figur 7 gezeigte Axial-Radial-Gleitlager in einer Schnittdarstellung zur Darstellung eines Betätigungselementes,
- Figur 9: Bestandteile des Betätigungselementes in einer Explosionsdarstellung,
- Figur 10: in einer perspektivischen Explosionsdarstellung ein erfindungsgemäß gestaltetes Axial-Radial-Gleitlager einer dritten Ausführungsform,
- Figur 11: in einer perspektivischen Explosionsdarstellung ein erfindungsgemäß gestaltetes Axial-Radial-Gleitlager einer vierten Ausführungsform, und
- Figur 12: in einer perspektivischen Explosionsdarstellung ein erfindungsgemäß gestaltetes Axial-Radial-Gleitlager einer fünften Ausführungsform zeigt.

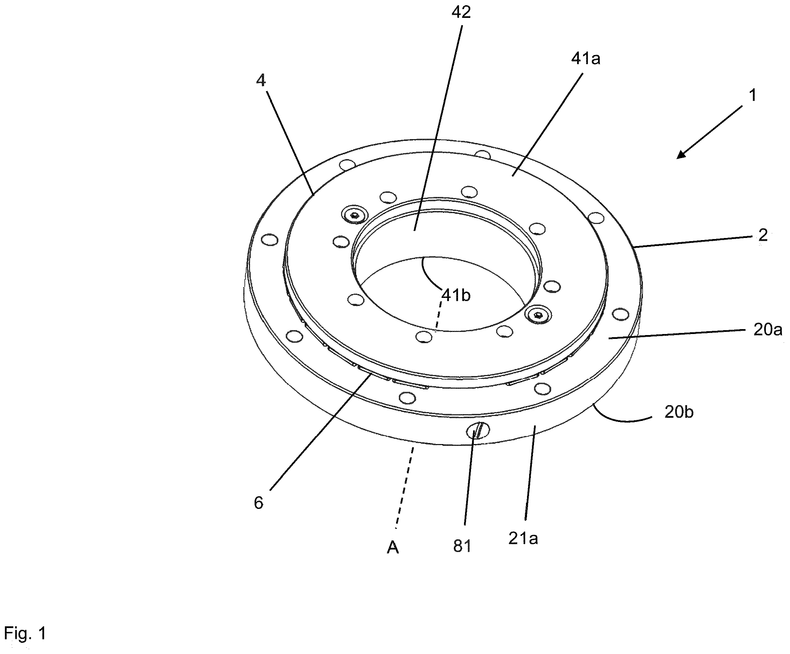

In Figur 1 ist ein erfindungsgemäßes Axial-Radial-Gleitlager 1 in einer perspektivischen Ansicht angegeben. Das Lager 1 weist einen ersten oder inneren Lagerring 2 auf, der koaxial zu einem zweiten oder äußeren Lagerring 4 angeordnet und von diesem über seine gesamte axiale Erstreckung und über einen Abschnitt seiner radialen Erstreckung aufgenommen ist. Hierzu ist der zweite Lagerring 4 in einem Schnitt, welcher die Längsachse des Gleitlagers umfasst, etwa U-förmig ausgebildet. Beide Lagerringe 2, 4 können aus einem gleichen oder unterschiedlichen Metallmaterial wie Aluminium oder Stahl ausgebildet sein. Es ist jedoch auch möglich zumindest einen der Lagerringe oder beide aus einem Kunststoffmaterial, insbesondere zumindest abschnittsweise, auszubilden.

In der dargestellten Ausführungsform ist der erste Lagerring 2 einstückig, in der Art eines Hohlzylinders mit niedriger Bauhöhe, ausgebildet, während der zweite Lagerring 4 sich aus zwei Ringabschnitten 41 a, b zusammensetzt, die axial beabstandet und mittels eines Axialflansches 42 verbunden sind zur Ausbildung des beschriebenen Rings mit U-förmigem Querschnitt. Zwischen einander zugewandten Radial- und Axialflächen der beiden Lagerringe 2, 4 sind L-förmige Gleitelemente 6 vorgesehen zur Entkopplung bzw. Aufhebung der Reibung zwischen den Lagerringen an den aneinander zugewandten Axial- und Radialflächen. Die Abmessungen der axialen Höhe des ersten Lagerrings einschließlich der Dicke der Gleitelemente 6 sind so an die axiale Beabstandung der Ringabschnitte 41 a, b des zweiten Lagerrings bzw. dessen Aufnahme angepasst, dass die beiden Lagerringe 2, 4 im Wesentlichen spielfrei bzw. mit einem geringen Spaltmaß um die Achse A des Gleitlagers zueinander drehbar angeordnet sind. Je nach Anwendung kann das erfindungsgemäße Axial-Radial-Gleitlager so verwendet werden, dass der erste Lagerring oder der zweite Lagerring ortsfest angeordnet ist, während der jeweils andere Lagerring zum erstgenannten drehbar ist.

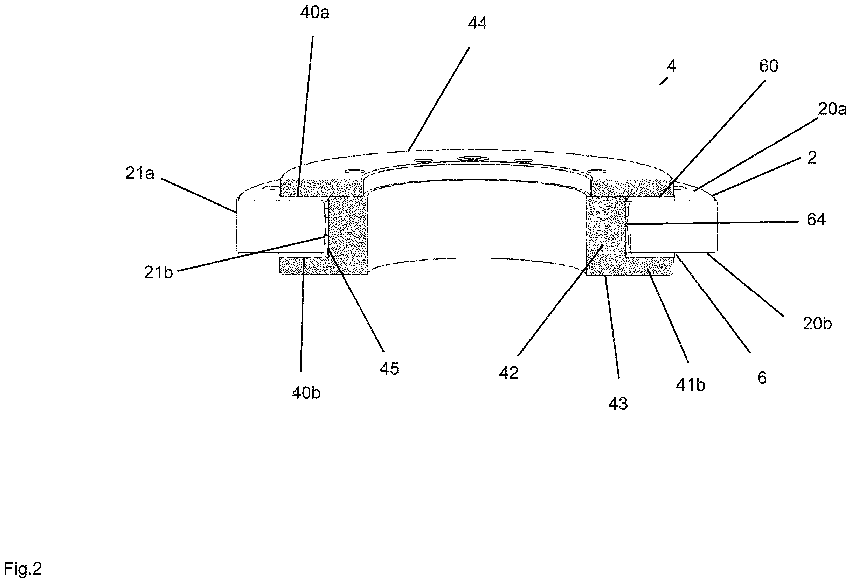

Figur 2 zeigt das Axial-Radial-Gleitlager der Figur 1 in einer Schnittdarstellung, wobei die Schnittebene die Lagerachse A umfasst. Erkennbar wird in der beschriebenen Ausführungsform der zweite Lagerring 4 durch einen L-förmigen Ring 43 gebildet, welcher einen Ringabschnitt 41b sowie einen Axialflansch 42 bereitstellt, an dessen freien Ende ein Ring 44 befestigt ist, sodass die Radialfläche 45 sowie die beiden Axialflächen 40 a, b des L-förmigen Rings 43 bzw. des Rings 44 eine Aufnahme für den ersten Lagerring 2 bilden. Erkennbar sind die Axialflächen 20 a, b des ersten Lagerrings den Axialflächen 40 a, b des zweiten Lagerrings zugewandt, in entsprechender Weise sind die Radialfläche 45 des zweiten Lagerrings und die Radialfläche 21 b des ersten Lagerrings einander zugewandt, wobei Gleitelemente 6 dazwischen angeordnet sind mit entsprechenden Sektorabschnitten parallel zu den angegebenen Axial- und Radialflächen der beiden Lagerringe, um ein möglichst reibungsfreies Drehen der beiden Lagerringe gegeneinander zu ermöglichen.

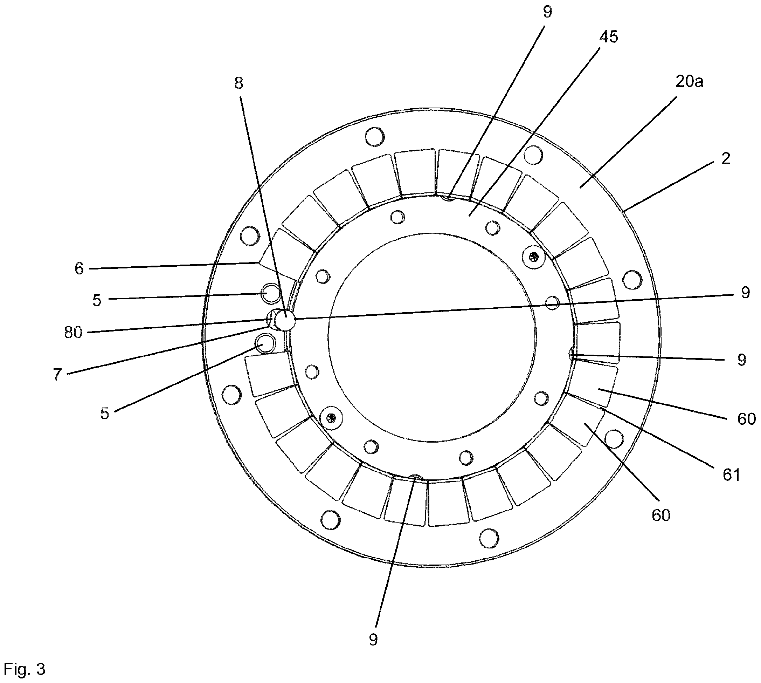

Figur 3 zeigt das erfindungsgemäß ausgestaltete Axial-Radial-Gleitlager 1 in einer frontalen Aufsicht, wobei der Ring 44, welcher zur Gestaltung des zweiten Lagerrings 4 an den L-förmigen Ring 43 angeschraubt ist, entfernt wurde. Insofern zeigt Figur 3 eine frontale Ansicht auf die Axialfläche 20a des ersten Lagerrings 2, auf welcher eine Mehrzahl von Gleitelementsektoren 60 in dem axialen Überlappungsbereich des ersten Lagerrings 2 mit dem zweiten Lagerring 4 angeordnet ist zur Bereitstellung axialer Gleitflächen. Zur Einstellung der jeweiligen Krümmung sind die sich umfänglich und in radialer Richtung erstreckenden Gleitelementsektoren 60 trapezförmig ausgebildet, sodass sich zwischen benachbarten Sektoren ein Schlitz 61 befindet. Die Gleitelementsektoren 60 decken den radial innenliegenden Abschnitt der Axialfläche 20a vollständig ab bis auf einen Winkelabschnitt, in welchem ein Sitz 7 für ein Rastelement 8 im ersten Lagerring 2 angeordnet ist. In der beschriebenen Ausführungsform erfolgt die Verrastung der beiden zueinander drehbar angeordneten Lagerringen an den jeweils zugewandten Radialflächen der beiden Lagerringe 2, 4. Dabei ist das Rastelement hier als zylinderförmiger Stift ausgebildet, der federbelastet in einer etwa rechteckförmigen und an den Durchmesser des Rastelements angepassten Ausnehmung angeordnet ist. Insofern wirkt diese Ausnehmung als Sitz 7 für das Rastelement 8, wobei die relative Lage des Rastelements innerhalb des Sitzes vom jeweiligen relativen Drehzustand der beiden Lagerringe 2, 4 zueinander abhängt. Wie dargestellt, weist der Sitz eine im Wesentlichen quaderförmige Gestalt bzw. Ausnehmung auf, wobei der Bodenabschnitt, d.h. der radiale Begrenzungsabschnitt, gekrümmt, insbesondere angepasst an die Krümmung des Rastelements 8, ausgebildet sein kann.

Das Rastelement 8 ist in der beschriebenen Ausführungsform mittels eines Federelements 80, hier in Form einer Spiralfeder, in radialer Richtung kraftbeaufschlagt, wobei das Federelement sich an einem Befestigungselement, beispielsweise einer radial angeordneten Schraube 81, siehe Figur 1, abstützt. Die in Figur 3 angegebene relative Drehlage der beiden Lagerringe 2, 4 resultiert zu einer Verrastung der beiden Lagerringe zueinander, da in der angegebenen relativen Drehlage das Rastelement 8 in eine diesem zugeordnete Rastausnehmung 9 aufgrund der Kraftbeaufschlagung eingedrückt ist, sodass die freie Drehbarkeit der Lagerringe zueinander blockiert ist. Erkennbar weist die Radialfläche 45 des Axialflansches 42 vier umfänglich um 90° beabstandete und an die zylindrische Form des Rastelements 8 angepasste Rastausnehmungen 9 auf, sodass bei einer Vollumdrehung definiert die vier wie beschrieben definierten Rastpositionen angefahren werden können.

Wie dargestellt ist im Bereich des Sitzes 7 für das Rastelement 8 an der Axialfläche 20a kein Gleitelementsektor eines der beschriebenen Gleitelemente zur Bereitstellung eines entsprechenden axialen Gleitflächenabschnittes in Trapezform vorgesehen, sondern stattdessen zwei zusätzliche, hier stabförmige, Gleitelemente 5, die sich jeweils mit ihrer Stirnfläche aus ihrer zugeordneten, axial verlaufenden Bohrung im ersten Lagerring heraus und bündig zu den Gleitelementsektoren 60 der Gleitelemente 6, erstrecken.

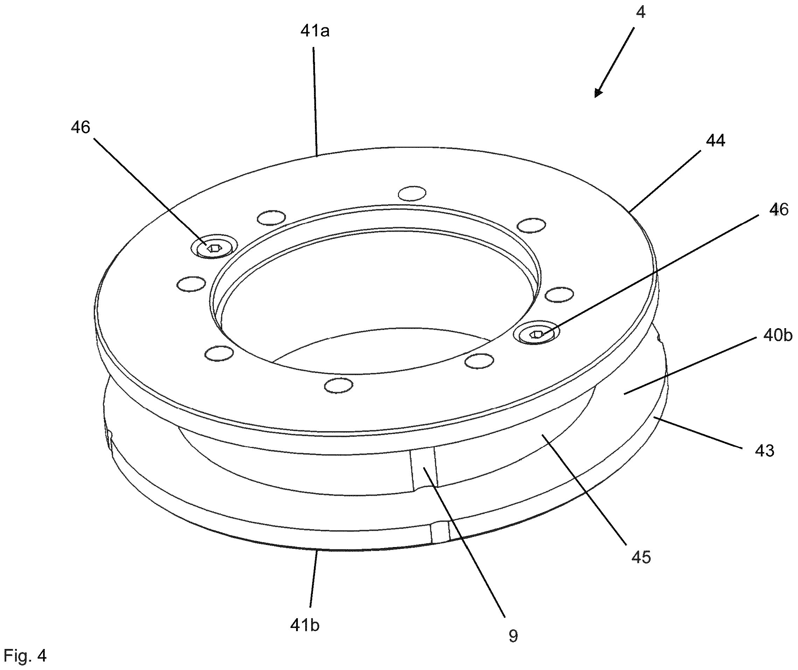

Figur 4 zeigt den zweiten Lagerring in einer perspektivischen Schrägansicht auf die Radialfläche 45 sowie eine der Rastausnehmungen 9, die sich in der beschriebenen Ausführungsform über die gesamte axiale Beabstandung zwischen den beiden Ringabschnitten 41a, b erstreckt und damit angepasst ist an die axiale Länge des Rastelements 8. Die in der beschriebenen Ausführungsform des erfindungsgemäßen Axial-Radial-Gleitlagers vorgesehenen vier Rastpositionen entsprechen vier relativen Drehlagen der beiden Lagerringe 2, 4 zueinander und sind durch Aufbringen eines Drehmomentes über eine vorgegebene Schwelle auflösbar, wobei die Auflösung hier symmetrisch, d.h. unabhängig von der Drehrichtung, eingestellt ist aufgrund einer symmetrischen Gestaltung der Rastflächen des Rastelements und des bzw. der zugeordneten Rastausnehmungen.

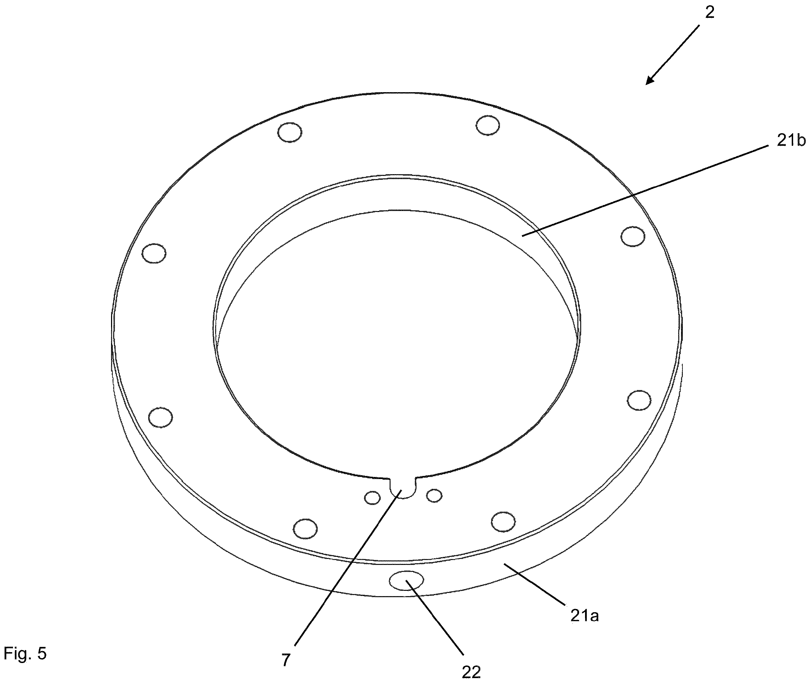

Figur 5 zeigt in einer Schrägansicht den ersten Lagerring 2 des erfindungsgemäßen Axial-Radial-Gleitlagers 1 in einer Einzelansicht. Erkennbar ist die radial innenliegende und der Radialfläche 45 des zweiten Lagerrings zugewandte Radialfläche 21b, an welcher der Sitz 7 in Form einer an das Rastelement 8 angepassten Ausnehmung ausgebildet ist. Eine Radialbohrung 22, ausgehend von der äußeren Radialfläche 21a, durchstößt den Sitz etwa axial mittig und nimmt im zusammengebauten Zustand das Federelement 80 sowie die Abstützschraube 81 auf. Entsprechend der Darstellung der Figur 4 erstreckt sich der Sitz axial über die gesamte Dicke des ersten Lagerrings 2.

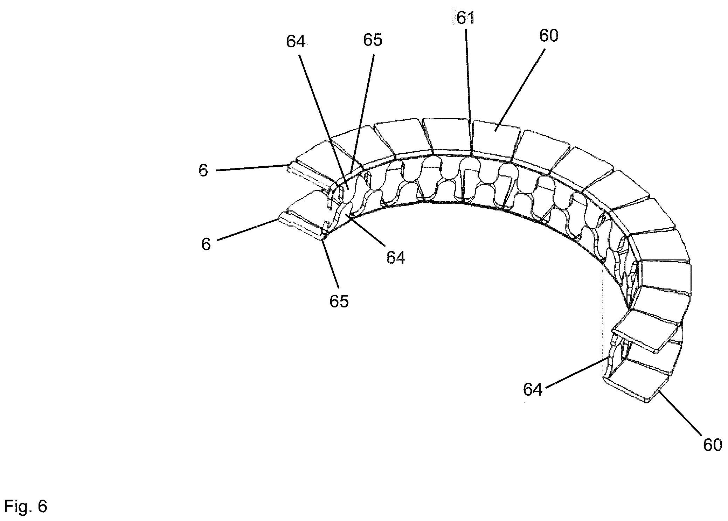

Figur 6 zeigt in einem Ausschnitt und in einer Einzeldarstellung Gleitelemente 6 zur Gestaltung des erfindungsgemäßen Axial-Radial-Gleitlagers 1. In der beschriebenen Ausführungsform kommen zwei Reihen von identisch aufgebauten Gleitelementen 6 zum Einsatz, wobei ein einzelnes Gleitelement einen axialen Gleitelementsektor 60 und einen radialen Gleitelementsektor 64 bereitstellt. In der beschriebenen Ausführungsform sind die axialen Gleitelementsektoren trapezförmig ausgebildet, wobei beide Sektoren 60, 64 in einem Winkel von etwa 90° zueinander angeordnet sind zur Ausbildung eines etwa L-förmigen Gleitelements. Hierzu weist jedes Gleitelement 6 ein Filmscharnier 65 auf, das durch eine Materialverdünnung in diesem Bereich ausgebildet sein kann. Dabei ist in dieser Ausführungsform eine erste Reihe von Gleitelementen 6 im Bereich des radialen Innenabschnittes des ersten Lagerrings 2 umfänglich aufeinanderfolgend angeordnet, sodass die Axialfläche 20a mit den axialen Gleitelementsektoren 60 und die innere Radialfläche 21b mit den radialen Gleitelementsektoren 64 der Gleitelemente 60 belegbar ist, siehe Fig. 5. Neben dieser ersten Reihe von Gleitelementen ist in gleicher Weise an der in Figur 5 untenliegenden Axialfläche 20b des ersten Lagerrings 2 eine weitere Reihe von Gleitelementen 6 mit Gleitelementsektoren 60 angeordnet, wobei die entsprechenden radialen Gleitelementsektoren 64 wiederum an der inneren Radialfläche 21b des ersten Lagerrings 2 anliegen zur axialen und radialen Entkopplung der Lagerringe 2, 4 in zusammengesetztem Zustand aller Bauteile des Axial-Radial-Gleitlagers.

Wie aus Figur 6 ersichtlich, kann die Anordnung derart sein, dass die radialen Gleitelementsektoren 64 der beiden Reihen von Gleitelementen endstämmig aneinanderstoßen, sodass das doppelte Maß der Gleitelementsektoren 64 in radialer Richtung im Wesentlichen der Dicke des ersten Lagerrings 2 entspricht. Erkennbar sind die Gleitelementsektoren 64 der Gleitelemente so ausgebildet, dass durch einen Versatz beider Reihen von Gleitelementen um die halbe Umfangserstreckung eines Gleitelements im Bereich des Filmscharniers 65 die Gleitelementsektoren 64 ineinandergreifen, sodass die innere Radialfläche 21 des inneren Lagerrings 2 im Wesentlichen vollständig durch die Gleitelementsektoren 64 abgedeckt ist, und sodass in dieser Ausführung die axiale Dicke des ersten Lagerrings 2 im Wesentlichen der axialen Erstreckung eines Gleitelementsektor 64 in axialer Richtung in Einbaulage entspricht.

In einer weiteren, nicht dargestellten Ausführungsform kann vorgesehen sein, dass alle Gleitelemente der beiden in Figur 6 angegebenen umfänglichen Reihen von Gleitelementen miteinander verbunden sind, insbesondere im Bereich der Filmscharniere 65. Auch eine solche Gliederkette von Gleitelementen kann beispielsweise auf einfache Weise durch ein Spritzgießverfahren hergestellt werden.

Der Fachmann erkennt, dass auch andere geometrische Gestaltungen der Gleitelementsektoren 60, 64 möglich sind in Abhängigkeit der jeweiligen Anwendung bzw. der auftretenden Betriebskräfte.

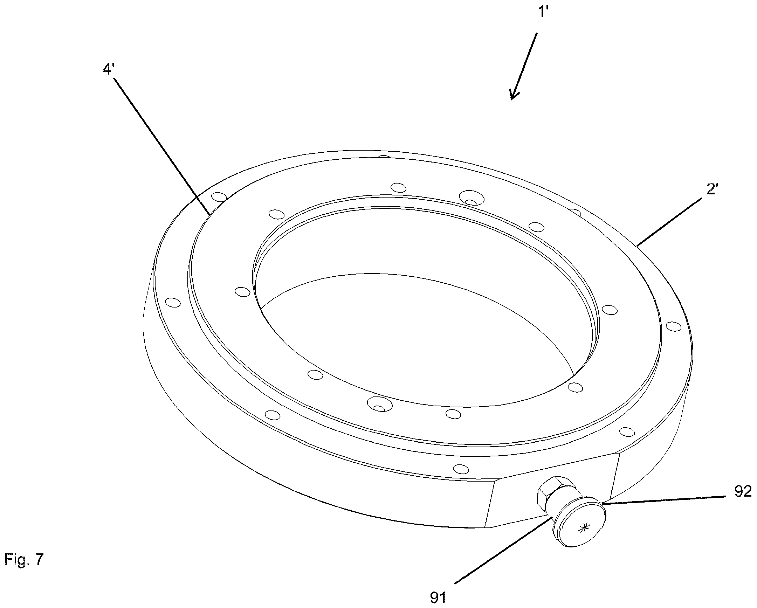

Mit Bezug auf die Figuren 7 bis 9 wird im Folgenden eine zweite Ausführungsform eines erfindungsgemäßen Axial-Radial-Gleitlagers 1' beschrieben, wobei Figur 7 das Gleitlager 1' in einer perspektivischen Ansicht zeigt, das in Bezug auf die Gestaltung und relative Anordnung des ersten und zweiten Lagerrings sowie der dazwischen angeordneten Gleitelemente und in Bezug auf weitere Details wie die grundsätzliche Ausgestaltung und Anordnung von Rastelement und der zumindest einen, diesem zugeordneten Rastausnehmung identisch zu der mit Bezug auf die Figuren 1 - 6 beschriebenen Ausführungsform ausgebildet sind. Insofern wird im Folgenden allein auf unterschiedliche Ausgestaltungen der mit Bezug auf die Figuren beschriebenen zweiten Ausführungsformen eingegangen.

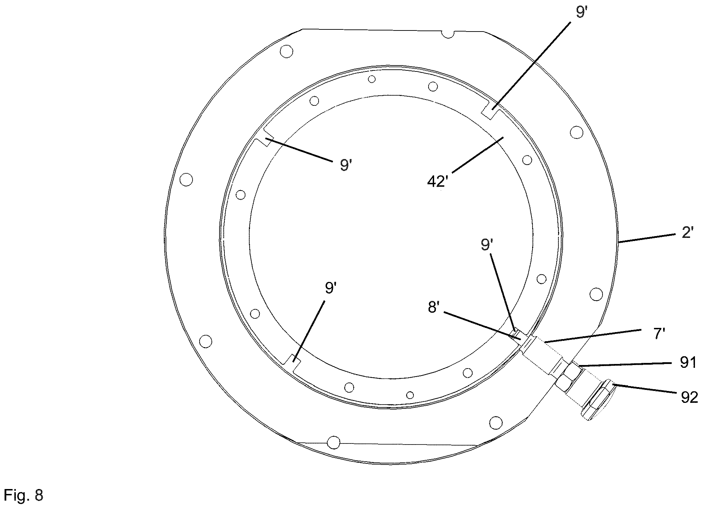

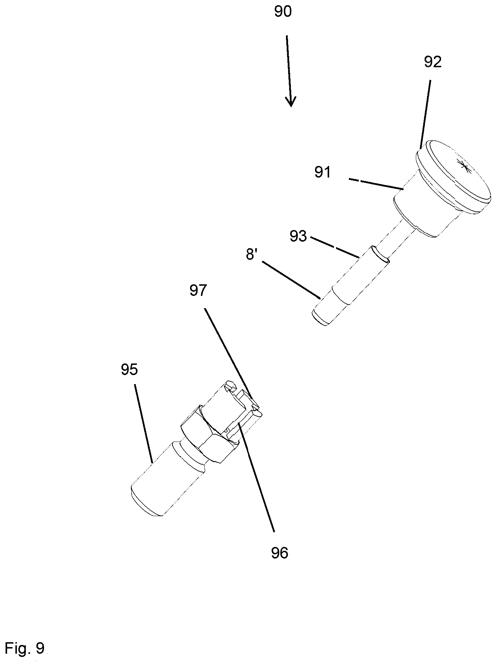

Das Gleitlager 1` der Figur 7 weist ein Betätigungselement 91 als Teil einer Betätigungsvorrichtung 90 auf, das in der beschriebenen Ausführungsform einen Betätigungsabschnitt 92 umfasst, der mit einem Rastelement bzw. Rastabschnitt 8' in Wirkverbindung steht, hier bewegungsgekoppelt ist, siehe Figur 8, welche das erfindungsgemäße Axial-Radial-Gleitlager 1` der Figur 7 in einer Schnittdarstellung senkrecht zur Achse zeigt mit Blick auf das freigeschnittene Betätigungselement 92. Ferner erkennbar in der angegebenen Schnittdarstellung sind die am Axialflansch 42' des zweiten Lagerrings 4' angeordneten Rastausnehmungen 9', die in dieser Ausführungsform identisch zu den Rastausnehmungen 9 der mit Bezug auf die Figuren 1 bis 6 beschriebenen Ausführungsform gestaltet sein können. Diese verlaufen hier insofern über die gesamte axiale Erstreckung des Axialflansches 42'. In einer nicht dargestellten Ausführungsform können diese Rastausnehmungen 9' auch zylinderförmig ausgebildet sein und insofern sich nicht über die gesamte axiale Erstreckung des Axialflansches 42' verlaufen, sodass in dieser Ausführungsform die Ausnehmungen axial geschlossen gestaltet sein können. Wie in Figur 8 dargestellt, kann das Betätigungselement 91 neben dem Betätigungsabschnitt 92 ein hier integral zu diesem angeordnetes Rastelement 8' aufweisen, das in dieser Ausführungsform als stiftartiger Zylinder ausgebildet sein kann, der in seiner Umfangserstreckung an die Umfangserstreckung der zugeordneten Rastausnehmungen 9' angepasst ist, um nach dem Einstellen der Verrastung ein umfängliches Spiel zwischen erstem und zweitem Lagerring (2', 4') zu vermeiden. Erkennbar ist der dem Rastelement 8' zugeordnete Sitz 7' im Wesentlichen als radiale Durchführung im ersten Lagerring 2' ausgebildet, in welcher eine Befestigungshülse 95 des Betätigungselementes 91 angeordnet ist, siehe Figur 9, welche eine Explosionsdarstellung der Betätigungsvorrichtung 90 ist. Die Betätigungsvorrichtung 90 weist neben der Befestigungshülse 95 ein Betätigungselement 91 auf, das hier langgestreckt ausgebildet ist und an einem ersten Ende das Rastelement 8' und an dem gegenüberliegenden Ende einen Betätigungsabschnitt 92 aufweist, wobei beide Endabschnitte des Betätigungselementes durch einen Verbindungsabschnitt 93 starr miteinander verbunden sind.

Im montierten Zustand erstreckt sich das Betätigungselement 91 durch die Befestigungshülse 95 und ist zu dieser über eine nicht dargestellte Feder abgestützt, derart, dass das Betätigungselement 91 und damit dessen Rastelement bzw. Rastabschnitt 8` zu den beiden Lagerringen radial nach innen kraftbeaufschlagt ist, sodass bei einer vorgegebenen Drehlage der beiden Lagerringe zueinander, bei welcher das Rastelement 8` des Betätigungselementes 91 radial gegenüber einer der Rastausnehmungen 9' liegt, das Betätigungselement 91 mit seinem Rastelement bzw. Rastelementabschnitt 8' in Eingriff mit der jeweiligen Rastausnehmung 9' gerät.

Eine Rastlösung, d.h., ein außer Eingriff bringen des Rastabschnittes des Betätigungselementes 91 mit einer jeweiligen Rastausnehmung 9', erfolgt durch Ziehen am Betätigungsabschnitt 92 radial nach außen. Um zu vermeiden, dass das Betätigungselement 91 beim Einstellen einer weiteren Montageposition bzw. einer weiteren relativen Lage der beiden Lagerringe zueinander permanent nach außen gezogen werden muss, weist die Betätigungsvorrichtung 90 eine Funktionalität zur Arretierung einer Betriebsposition auf, bei welcher Verrastungen zwischen Rastelement und einer der Rastausnehmungen vorliegt. Zu diesem Zweck weist in der beschriebenen Ausführungsform die Befestigungshülse 95 einen zu den Lageringen radial verlaufenden Führungsschlitz 96 auf, der mit einem in Figur 9 verdeckten radialen Vorsprung im Bereich des Betätigungsabschnittes 92 zusammenwirkt zur radialen Zwangsführung des Betätigungselementes 91 zur Befestigungshülse 95. In einer solchen Betriebsposition, bei welcher das Betätigungselement 91 bzw. der durch den Führungsschlitz 96 geführte Vorsprung außer Eingriff zum Führungsschlitz 96 gerät, ist das Betätigungselement 91 zur Drehung relativ zur feststehenden Befestigungshülse 95 angeordnet, sodass der am Betätigungselement 91 angeordnete Führungsstift in einen radialen Formschluss mit der Stirnwandung 97 der Befestigungshülse 95 gerät, sodass die Betätigungsvorrichtung 90 arretiert ist. Diese Arretierung ist durch Zurückdrehen des Betätigungselementes in die Ausgangsposition aufhebbar, bei welcher der radiale Formschluss aufgehoben und der Führungsstift wieder in Eingriff mit dem Führungsschlitz 97 gerät, sodass das Betätigungselement aufgrund der Federkraftbelastung auf das Rastelement 8` und damit auf das Betätigungselement radial nach innen gedrückt wird solange keine der Federkraftbeaufschlagung entgegenwirkende Kraft über den Betätigungsabschnitt 92 in das System eingeführt wird.

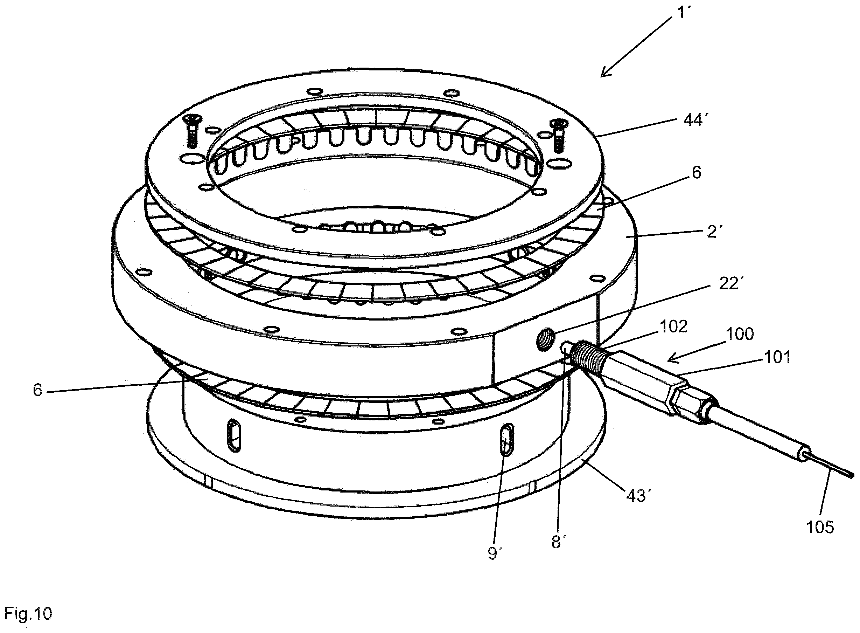

Die nachfolgenden Figuren 10 bis 13 zeigen unterschiedliche Axial-Radial-Gleitlager 1', die in Bezug auf die Gestaltung und Anordnung des ersten Lagerrings 2', des zweiten Lagerrings 4' und der Gleitelemente 6 sowie des Sitzes 7' sich nicht von der Ausführungsform der Figuren 7, 8 unterscheiden, sondern allein in Bezug auf die Gestaltung Betätigungsvorrichtung 100, 110, 120, worauf im Folgenden eingegangen wird.

In der Ausführungsform der Figur 10 umfasst die Betätigungsvorrichtung 100 ein stabförmiges Gehäuse 101, das an seinem dem Rastelement 8' zugewandten stirnseitigen Ende als Gewindehülse 102 ausgebildet ist, über welche die Betätigungsvorrichtung 100 in die Gewindebohrung 22` des ersten Lagerrings 2' einschraubbar ist. In dieser Ausführungsform ist das Rastelement 8` über ein als Bowdenzug 105 ausgebildetes Zugmittel mit einem in der Figur nicht dargestellten, insbesondere manuell betätigbaren Betätigungsabschnitt verbunden. Beispielsweise kann ein zum eigentlichen Gleitlager umfassend die beiden Lagerringe entfernt (remote) angeordneter Betätigungsabschnitt der Betätigungsvorrichtung wie beispielsweise ein Betätigungshebel vorgesehen sein, über den eine Zugkraft auf den Bowdenzug 105 aufbringbar ist, um eine Raststellung zwischen erstem und zweitem Lagerring 2', 4' zu lösen. Hierzu ist der Bowdenzug 105 bewegungsgekoppelt mit dem Rastelement 8' angeordnet, beispielsweise an diesem direkt oder unter Zwischenschaltung zumindest eines weiteren Bauelementes befestigt.

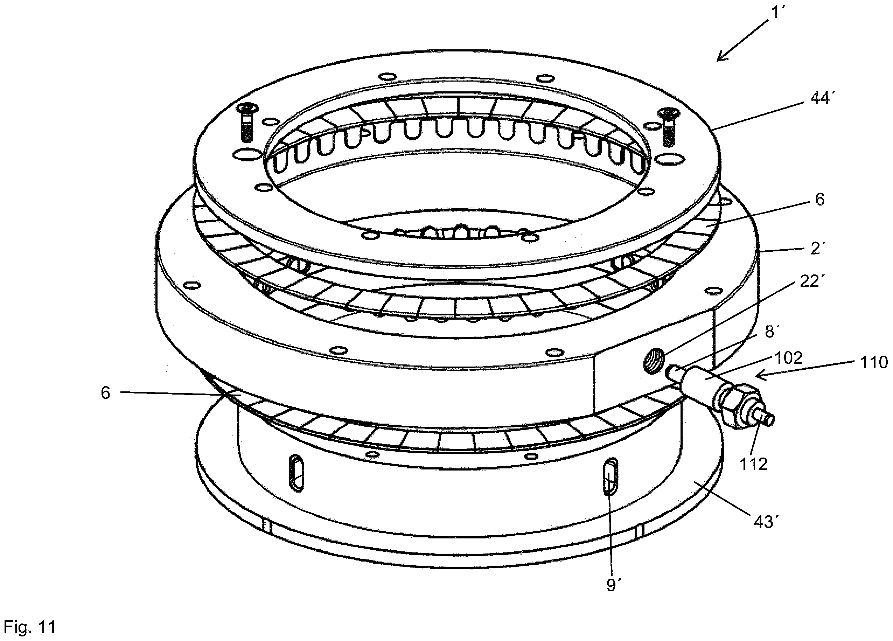

In der in Figur 11 dargestellten Ausführungsform eines erfindungsgemäß gestalteten Axial-Radial-Gleitlagers weist die Betätigungsvorrichtung 110 an ihrem Gehäuse eine dem Rastelement 8' zugewandte Gewindehülse 102 auf, mit welcher die Vorrichtung 110 in die zugeordnete Gewindebohrung 22` des ersten Lagerrings 2' einschraubbar ist. Das Rastelement 8` ist wiederum beweglich in radialer Richtung zum Gehäuse der Betätigungsvorrichtung 110 angeordnet und in der beschriebenen Ausführungsform starr mit einem Kupplungsbolzen 112 verbunden, der an der zum Rastelement abgewandten Stirnseite des Gehäuses der Betätigungsvorrichtung 110 herausragt. Insofern ist Kupplungsbolzen 112 in der beschriebenen Ausführungsform mit dem Rastelement 8' in Einbaulage zum Gehäuse der Betätigungsvorrichtung 110 bzw. zum ersten Lagerring in radialer Richtung bewegbar angeordnet. Diese Ausführungsform eines erfindungsgemäß gestalteten Axial-Radial-Gleitlagers eignet sich insbesondere zum Verbinden mit einem nutzerspezifischen Verstellaggregat, das in der Figur 11 nicht dargestellt ist und mit dem Kupplungsgewindebolzen 112 durch einfaches Aufschrauben koppelbar ist, indem das Verstellaggregat ein komplementär ausgebildete Kupplungsteil in Form eines Muttergewindes aufweist.

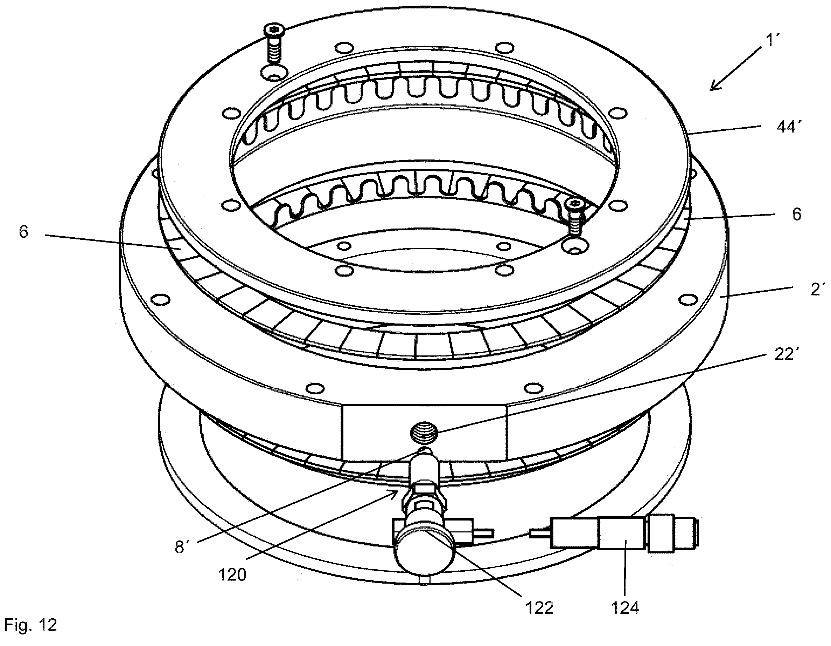

In der Ausführungsform der Figur 12 weist die Betätigungsvorrichtung 120 ein elektrisch betätigbares Verstellaggregat 122 auf, welches als Überwachungseinrichtung einen elektrischen Überwachungskontakt umfasst, bei welchem eine Kontaktfläche abtriebsseitig zum Verstellaggregat bewegungsgekoppelt ist zur Anzeige eines jeweiligen Rastzustandes und/oder eines Rastlösezustandes des Gleitlagers. In der beschriebenen Ausführungsform ist das Verstellaggregat als Elektrozylinder ausgebildet, wobei der Elektrozylinder ein Gehäuse aufweist, zu welchem das Rastelement 8' verschiebbar angeordnet und das eine Gewindehülse 102 umfasst, mit welchem die Betätigungsvorrichtung 120 bzw. das Verstellaggregat 122 in die zugeordnete Gewindebohrung 22` des ersten Lagerrings einschraubbar ist. In der beschriebenen Ausführungsform ist das Verstellaggregat 122 mit einer integrierten Energiequelle, wie einem Akku, ausgestattet, sodass das Verstellaggregat ohne externe Energiequelle auskommt. Zur Steuerung des Verstellaggregats und/oder zur Weitergabe eines erfassten Betriebszustandes über den beschriebenen Überwachungskontakt weist die Betätigungsvorrichtung 120 neben dem Verstellaggregat 122 ein mit diesem galvanisch und mechanisch gekoppeltes, insbesondere mit einer externen Steuereinrichtung drahtlos kommunizierendes Transceiver-Modul 124 auf. Beispielsweise können über das Transceiver-Modul 124 Steuerungssignale zur Steuerung des Verstellaggregats an dieses weitergeleitet, und/oder erfasste Betriebszustände der Verrastung/Nichtverrastung zwischen den beiden Lagerringen 2', 4' bzw. eine Anzahl von erfassten Betriebszustandsänderungen an eine externe Steuereinrichtung übermittelt werden.

### Bezugszeichenliste

- 1, 1': Axial-Radial-Gleitlager
- 2, 2': erster Lagerring
- 4, 4': zweiter Lagerring
- 5: Gleitelement
- 6: Gleitelement
- 7, 7': Sitz
- 8, 8`: Rastelement
- 9, 9`: Rastausnehmung
- 20a, b: Axialfläche
- 21a: äußere Radialfläche
- 21b: innere Radialfläche
- 22, 22`: Bohrung
- 40a, b: Axialfläche
- 41a, b: Ringabschnitt
- 42, 42': Axialflansch
- 43: L-förmiger Ring
- 44, 44`: Ring
- 45: Radialfläche
- 46: Befestigungsschraube
- 60: Gleitelementsektor der Axialfläche, erster Sektor
- 61: Schlitz
- 64: Gleitelementsektor der Radialfläche; zweiter Sektor
- 65: Filmscharnier
- 80: Federelement, Feder
- 81: Abstützschraube
- 90: Betätigungsvorrichtung
- 91: Betätigungselement
- 92: Betätigungsabschnitt
- 93: Verbindungsabschnitt, Kraftübertragungsabschnitt
- 95: Befestigungshülse
- 96: Führungsschlitz
- 97: Stirnwandung
- 100, 110, 120: Betätigungsvorrichtung
- 101: Gehäuse
- 102: Gewindehülse
- 105: Bowdenzug
- 112: Kupplungsbolzen
- 122: Stellaggregat mit integriertem Überwachungskontakt
- 124: Transceiver-Modul
- A: Drehachse

## Patentansprüche

1. Axial-Radial-Gleitlager (1) umfassend
- einen ersten Lagerring (2) und
- einen zweiten Lagerring (4), wobei die Lagerringe gegeneinander um eine Lagerachse (A) drehbar angeordnet sind, und der zweite Lagerring (4) einen im Wesentlichen U-förmigen Querschnitt bildet, um den ersten Lagerring (2) zumindest abschnittsweise aufzunehmen,
- Gleitelemente (6) aus einem Polymermaterial, welche zwischen erstem und zweitem Lagerring angeordnet sind, um die Lagerringe axial und radial zu entkoppeln, wobei die Gleitelemente (6) jeweils einen im Wesentlichen L-förmigen Querschnitt aufweisen mit einem Axialbereich umfassend axiale Gleitflächen und einem Radialbereich umfassend radiale Gleitflächen,
**dadurch gekennzeichnet, dass**
zumindest einer der beiden Lagerringe einen Sitz (7) für ein in diesem aufgenommenes, kraftbeaufschlagtes und auslenkbares Rastelement (8) aufweist und der andere der beiden Lageringe (2, 4) zumindest eine dem Rastelement (8) zugeordnete Rastausnehmung (9) umfasst zur wenigstens abschnittsweisen Aufnahme des auslenkbaren Rastelementes (8) zur Bereitstellung einer lösbaren Verrastung bei einer vorgegebenen relativen Drehlage der beiden Lagerringe (2, 4) zueinander, wobei
i) das Axial-Radial-Gleitlager (1) dergestalt ausgebildet ist, dass ein Lösemoment zur Aufhebung der Verrastung der beiden Lagerringe (2, 4) zueinander durch Aufbringen eines vorgegebenen Drehmoments auf einen der beiden Lagerringe (2, 4) erzeugbar ist, während der andere der beiden Lagerringe (2, 4) ortsfest gehalten ist, wobei dieses vorgegebene Drehmoment eine Drehmomentschwelle darstellt, ab welcher die Verrastung lösbar ist,
und/oder
ii) der erste Lagerring (2) von dem zweiten Lagerring (4) über seine gesamte axiale Erstreckung und über einen Abschnitt seiner radialen Erstreckung aufgenommen ist, wobei das Rastelement (8) und die Rastausnehmung (9) an einander zugewandten Grenzflächen der beiden Lagerringe (2, 4) angeordnet sind.

2. Axial-Radial-Gleitlager (1) nach Anspruch 1, **dadurch gekennzeichnet, dass** das Rastelement (8) und die zumindest eine diesem zugeordnete Rastausnehmung (9) an jeweils einander zugewandten Radialflächen (21b, 45) des einen und des anderen Lagerringes angeordnet sind, und dass das im Sitz (7) des einen Lagerrings angeordnete Rastelement (8) in radialer Richtung kraftbeaufschlagt und auslenkbar ist.

3. Axial-Radial-Gleitlager (1) nach Anspruch 1 oder 2, **dadurch gekennzeichnet, dass** das Rastelement (8) zumindest abschnittsweise eine kugel- oder zylinderförmige Rastfläche aufweist, die in einer Raststellung des Rastelements (8) zu der zumindest einen Rastausnehmung (9) mit einer zumindest abschnittsweise komplementär ausgebildeten Rastfläche der Rastausnehmung korrespondiert.

4. Axial-Radial-Gleitlager (1) nach Anspruch 1, 2 oder 3, **dadurch gekennzeichnet, dass** der zweite Lagerring (4) zwei axial beabstandete Ringabschnitte (41a, b) aufweist, die durch einen Axialflansch (42) verbunden sind, wobei der erste Lagerring (2) zumindest abschnittsweise zwischen den beiden axial beabstandeten Ringabschnitten (41a, b) des zweiten Lagerrings (4) angeordnet ist.

5. Axial-Radial-Gleitlager (1) nach einem der Ansprüche 1 bis 4, **dadurch g e k e n n z e ichn e t, dass** das Rastelement (8) ein- oder mehrstückig ausgebildet ist und sich über mehr als die Hälfte des axialen Maßes des Lagerrings mit der geringeren axialen Erstreckung erstreckt.

6. Axial-Radial-Gleitlager (1) nach einem der Ansprüche 1 bis 5, **dadurch gekennzeichnet, dass** zur Bereitstellung einer Kraftbeaufschlagung des Rastelementes (8) eine Feder (80) vorgesehen ist, die in einer Bohrung (22), insbesondere einer radialen Bohrung, des einen der beiden Lagerringe angeordnet ist und zwischen dem Rastelement (8) und einem radialen Anschlagselement wie einer Schraube (81) eingespannt ist.

7. Axial-Radial-Gleitlager (1) nach einem der Ansprüche 1 bis 6, **dadurch gekennzeichnet, dass** der andere der beiden Lagerringe eine Mehrzahl von umfänglich zueinander beabstandeten Rastausnehmungen (9) aufweist zur sukzessiven Aufnahme des Rastelements (8) bei einer Drehung der beiden Lagerringe (2, 4) zueinander.

8. Axial-Radial-Gleitlager (1) nach einem der Ansprüche 1 bis 7, **dadurch gekennzeichnet, dass** der Sitz (7) für das Rastelement (8) an dem einen der beiden Lagerringe zum im Wesentlichen vollständigen Aufnehmen des Rastelementes in relativen Betriebsstellungen der beiden Lagerringe (2, 4) zueinander außerhalb einer Rastposition ausgebildet ist.

9. Axial-Radial-Gleitlager (1) nach einem der Ansprüche 1 bis 8, **dadurch gekennzeichnet, dass** die zumindest eine Rastausnehmung (9) an dem zweiten Lagerring (4) und der Sitz (7) des Rastelements an dem ersten Lagerring (2) angeordnet sind.

10. Axial-Radial-Gleitlager (1') nach einem der Ansprüche 1, 2, 4, 7, 8 und 9, soweit dieses die Merkmale ii) umfasst, **dadurch gekennzeichnet, dass** an dem einen der beiden Lagerringen eine Betätigungsvorrichtung (90) angeordnet ist, wobei die Betätigungsvorrichtung einen zu diesem Lagerring (2') bewegbaren Betätigungsabschnitt (92) aufweist, der in Wirkverbindung zum Rastelement (8') steht.

11. Axial-Radial-Gleitlager (1') nach Anspruch 10, **dadurch gekennzeichnet, dass** die Betätigungsvorrichtung (90) eingerichtet und ausgebildet ist, über den Betätigungsabschnitt (92) eine zur Kraftbeaufschlagung auf das Rastelement (8') entgegenwirkende Kraft auf das Rastelement auszuüben zum Lösen der Verrastung von Rastelement (8') und der zumindest einen Rastausnehmung (9').

12. Axial-Radial-Gleitlager (1') nach Anspruch 10 oder 11, **dadurch gekennzeichnet, dass** der Betätigungsabschnitt (92) der Betätigungsvorrichtung zu dem einen der beiden Lagerringen radial auslenkbar angeordnet ist.

13. Axial-Radial-Gleitlager (1') nach einem der Ansprüche 10, 11 oder 12, **dadurch gekennzeichnet,** das s das Rastelement (8') und der Betätigungsabschnitt (92) über ein Kraftübertragungselement bzw. -abschnitt der Betätigungsvorrichtung (90) in Wirkverbindung stehen.

14. Axial-Radial-Gleitlager (1') nach einem der Ansprüche 10 bis 13, **dadurch gekennzeichnet, dass** die Betätigungsvorrichtung (90) zum Arretieren einer Betriebsstellung eingerichtet und ausgebildet ist, in welcher eine Verrastung des Rastelements (8') in der zumindest einen Rastausnehmung (9') gelöst ist.

15. Axial-Radial-Gleitlager (1`) nach Anspruch 14, **dadurch gekennzeichnet, dass** der Betätigungsabschnitt (92) ausgehend von einer Raststellung des Rastelementes (8') zum Lösen der Verrastung über eine vorgegebene Streckenschwelle in radialer Richtung relativ zu dem einen der beiden Lagerringen (2', 4') zwangsgeführt bewegbar angeordnet ist und nach Überschreiten der Streckenschwelle um eine radiale Richtung drehbar angeordnet ist zur Einstellung eines radialen Formschlusses zwischen Betätigungsabschnitt (92) und dem einen der beiden Lagerringe (2').

16. Axial-Radial-Gleitlager (1) nach einem der Ansprüche 1 bis 15, **dadurch gekennzeichnet, dass** zwischen den radialen und axialen Gleitflächen der jeweiligen Gleitelemente (6) eine Materialverdünnung in der Art eines Filmscharniers (65) vorgesehen ist zur Abwinklung der radialen zu den axialen Gleitflächen eines Gleitelements (6) um ca. 90°.

17. Axial-Radial-Gleitlager (1) nach einem der Ansprüche 1 bis 16, **dadurch gekennzeichnet, dass** ein Gleitelement (6) im Bereich seiner axialen Gleitflächen eine Mehrzahl von im Wesentlichen lückenfrei angeordneten und umfänglich aufeinanderfolgenden ersten Sektoren (60) umfasst, während das Gleitelement (6) im Bereich seiner radialen Gleitflächen eine Mehrzahl von zueinander umfänglich beabstandet angeordneten und umfänglich aufeinanderfolgenden zweiten Sektoren (64) umfasst.

18. Axial-Radial-Gleitlager (1) nach einem der Ansprüche 1 bis 17, **dadurch gekennzeichnet, dass** zumindest zwei Gleitelemente (6) umfasst sind, die in Einbaulage in Bezug auf ihre axiale Gleitfläche axial um etwa das axiale Maß des ersten Lagerrings (2) zueinander versetzt sind und insbesondere umfänglich zueinander um etwa das halbe Umfangsmaß der ersten Sektoren (60) versetzt angeordnet sind.

19. Axial-Radial-Gleitlager (1) nach einem der Ansprüche 10 bis 18, **dadurch gekennzeichnet, dass** die Betätigungsvorrichtung einen steuerbare Stellantrieb aufweist zum nichtmanuellen Einstellen und/oder Lösen der Verrastung des Rastelementes in der zumindest einen Rastausnehmung.

20. Axial-Radial-Gleitlager (1) nach einem der Ansprüche 10 bis 19, **dadurch gekennzeichnet, dass** der Betätigungsabschnitt eine mechanische Kupplungseinrichtung wie ein Bolzengewinde oder Muttergewinde aufweist zur Ankopplung an ein Stellelement.

21. Axial-Radial-Gleitlager (1) nach einem der Ansprüche 1 bis 20, **gekennzeichnet durch** eine Überwachungseinrichtung zur Erfassung von Verrastungs- und/oder Nichtverrastungszuständen des Axial-Radial-Gleitlagers (1).

## Claims

1. Axial-radial sliding bearing (1) comprising
- a first bearing ring (2) and
- a second bearing ring (4), wherein the bearing rings are arranged to be rotatable against each other about a bearing axis (A) and wherein the second bearing ring (4) forms a substantially U-shaped cross section in order to receive the first bearing ring (2) at least in sections,
- sliding elements (6) made of a polymer material, which are disposed between the first and the second bearing ring to decouple the bearing rings axially and radially from each other, wherein the sliding elements (6) each have a substantially L-shaped cross section with an axial region comprising axial sliding surfaces and with a radial region comprising radial sliding surfaces,
**characterized in that**
at least one of the two bearing rings has a seat (7) for a force-loaded and deflectable detent element (8) received therein and the other one of the two bearing rings (2, 4) has at least one detent recess (9) for accommodating the deflectable detent element (8) at least in sections in order to provide a releasable locking action at a specified relative rotational position of the two bearing rings (2, 4) to each other, wherein
i) the axial-radial sliding bearing (1) is configured in such a way that a release torque for releasing the locking of the two bearing rings (2, 4) to each other can be generated by applying a predetermined torque to one of the two bearing rings (2, 4) while the other one of the two bearing rings (2, 4) is kept stationary, this predetermined torque representing a torque threshold from which the locking is releasable,
and/or
ii) the first bearing ring (2) is received by the second bearing ring (4) over its entire axial extent and over a section of its radial extent, the detent element (8) and the detent recess (9) being arranged on mutually facing boundary surfaces of the two bearing rings (2, 4).

2. Axial-radial sliding bearing (1) according to claim 1, **characterized in that** the detent element (8) and the detent recess (9) assigned to it are arranged on respective mutually facing radial surfaces (21b, 45) of one bearing ring and the other and that the detent element (8) arranged within the seat (7) of the one bearing ring is force-loaded and deflectable in the radial direction.

3. Axial-radial sliding bearing (1) according to claim 1 or 2, **characterized in that** the detent element (8) has a ball or cylinder-shaped locking surface at least in sections, which locking surface, in a locking position of the detent element (8), corresponds to the at least one detent recess (9) with a complementary locking surface of the detent recess configured in a complementary manner at least in sections.

4. Axial-radial sliding bearing (1) according to claim 1, 2 or 3, **characterized in that** the second bearing ring (4) has two axially spaced ring sections (41a, b) that are connected by an axial flange (42), the first bearing ring (2) being arranged between the two axially spaced ring sections (41a, b) of the second bearing ring (4) at least in sections.

5. Axial-radial sliding bearing (1) according to any one of claims 1 to 4 , **characterized in that** the detent element (8) is of single or multi-piece configuration and extends over more than half of the axial dimension of the bearing ring with the smaller axial extent.

6. Axial-radial sliding bearing (1) according to any one of claims 1 to 5, **characterized in that** a spring (80) is provided for force application to the detent element (8), which spring is arranged within a bore (22), in particular a radial bore, of one of the two bearing rings and is clamped between the detent element (8) and a radial stop element such as a screw (81).

7. Axial-radial sliding bearing (1) according to any one of claims 1 to 6, **characterized in that** the other one of the two bearing rings has a plurality of circumferentially spaced detent recesses (9) for successively receiving the detent element (8) upon rotation of the two bearing rings (2, 4) to each other.

8. Axial-radial sliding bearing (1) according to any one of claims 1 to 7, **characterized in that** the seat (7) for the detent element (8) is formed on one of the two bearing rings, for substantially completely receiving the detent element (8) in relative operating positions of the two bearing rings (2, 4) to each other outside of a locking position.

9. Axial-radial sliding bearing (1) according to any one of claims 1 to 8, **characterized in that** the at least one detent recess (9) is disposed on the second bearing ring (4) and the seat (7) of the detent element is disposed on the first bearing ring (2).

10. Axial-radial sliding bearing (1') according to any one of claims 1, 2, 4, 7, 8 and 9, as far as comprising feature ii), **characterized in that** an actuating device (90) is arranged on the one of the two bearing rings, the actuating device having an actuating section (92) movable to this bearing ring (2'), which actuating section is in operative connection to the detent element (8').

11. Axial-radial sliding bearing (1') according to claim 10, **characterized in that** the actuating device (90) is designed and configured to apply, via the actuating section (92), a force to the detent element, which force acts against the force application to the detent element (8') in order to release the locking of the detent element (8') and the at least one detent recess (9').

12. Axial-radial sliding bearing (1') according to claim 10 or 11, **characterized in that** the actuating section (92) of the actuating device is arranged to be radially deflectable relative to the one of the two bearing rings.

13. Axial-radial sliding bearing (1') according to any one of claims 10, 11 or 12, **characterized in that** the detent element (8') and the actuating section (92) are in operative connection via a force transmitting element or section of the actuating device (90).

14. Axial-radial sliding bearing (1') according to any one of claims 10 to 13, **characterized in that** the actuating device (90) is designed and configured for locking an operating position in which a locking of the detent element (8') in the at least one detent recess (9') is released.

15. Axial-radial sliding bearing (1') according to claim 14, **characterized in that** the actuating section (92), for releasing the locking from a locking position of the detent element (8'), is arranged to be forcibly movable in a radial direction relative to one of the two bearing rings (2', 4') over a predetermined distance threshold and, after exceeding the distance threshold, is arranged to be rotatable about a radial direction for setting a radial form closure between the actuating section (92) and the one of the two bearing rings (2').

16. Axial-radial sliding bearing (1) according to any one of claims 1 to 15, **characterized in that** a material thinning in the manner of a film hinge (65) is provided between the radial and axial sliding surfaces of the respective sliding elements (6) for angling the radial to the axial sliding surfaces of a sliding element (6) by approx. 90°.

17. Axial-radial sliding bearing (1) according to any one of claims 1 to 16, **characterized in that** a sliding element (6) comprises, in the region of its axial sliding surfaces, a plurality of first sectors (60) arranged essentially without gaps and succeeding each other circumferentially, while the sliding element (6) comprises, in the region of its radial sliding surfaces, a plurality of circumferentially mutually spaced second sectors (64) succeeding each other circumferentially.

18. Axial-radial sliding bearing (1) according to any one of claims 1 to 17, **characterized in that** there are comprised at least two sliding elements (6) which, in the installed position, are offset axially with respect to their axial sliding surface by approximately the axial dimension of the first bearing ring (2) and, in particular, are arranged offset circumferentially with respect to one another by approximately half the circumferential dimension of the first sectors (60).

19. Axial-radial sliding bearing (1) according to any one of claims 10 to 18, **characterized in that** the actuating device comprises a controllable actuator for non-manually setting and/or releasing the locking of the detent element in the at least one detent recess.

20. Axial-radial sliding bearing (1) according to any one of claims 10 to 19, **characterized in that** the actuating section includes a mechanical coupling device such as a bolt thread or female thread for coupling to an adjusting element.

21. Axial-radial sliding bearing (1) according to any one of claims 1 to 20, **characterized by** a monitoring device for the detection of locked and/or non-locked states of the axial-radial sliding bearing (1).

## Revendications

1. Palier lisse axial-radial (1) comprenant
- une première bague de roulement (2) et
- une deuxième bague de roulement (4), dans lequel les bagues de roulement sont disposées de manière à pouvoir tourner l'une contre l'autre autour d'un axe de roulement (A) et dans lequel la deuxième bague de roulement (4) forme une section transversale sensiblement en forme de U afin de recevoir la première bague de roulement (2) au moins en sections,
- des éléments de glissement (6) en matériau polymère, disposés entre la première et la deuxième bague de roulement pour découpler axialement et radialement les bagues de roulement l'une de l'autre, les éléments de glissement (6) ayant chacun une section transversale sensiblement en forme de L avec une région axiale comprenant des surfaces de glissement axial et avec une région radiale comprenant des surfaces de glissement radial,
**caractérisé en ce que**
au moins l'une des deux bagues de roulement comporte un siège (7) pour un élément de verrouillage (8) sous charge de force et déformable qui y est reçu et l'autre des deux bagues de roulement (2, 4) comporte au moins un évidement de verrouillage (9) pour recevoir l'élément de verrouillage déformable (8) au moins en sections afin de fournir un verrouillage amovible à une position de rotation relative prédéterminée des deux bagues de roulement (2, 4) l'une par rapport à l'autre, dans lequel
i) le palier lisse axial-radial (1) est configuré de telle sorte qu'un couple de déclenchement pour libérer le verrouillage des deux bagues de roulement (2, 4) l'une par rapport à l'autre peut être généré en appliquant un couple prédéterminé à l'une des deux bagues de roulement (2, 4) tandis que l'autre des deux bagues de roulement (2, 4) est maintenue immobile, ce couple prédéterminé représentant un seuil de couple à partir duquel le verrouillage est amovible,
et/ou
ii) la première bague de roulement (2) est reçue par la deuxième bague de roulement (4) sur toute son étendue axiale et sur une partie de son étendue radiale, l'élément de verrouillage (8) et l'évidement de verrouillage (9) étant disposés sur les surfaces limites des deux bagues de roulement (2, 4) qui se font face.

2. Palier lisse axial-radial (1) selon la revendication 1, **caractérisé en ce que** l'élément de verrouillage (8) et l'évidement de verrouillage (9) qui lui est associé sont disposés sur des surfaces radiales (21b, 45) se faisant mutuellement face d'une bague de roulement et de l'autre et **en ce que** l'élément de verrouillage (8) disposé dans le siège (7) de l'une des bagues de roulement est soumis à une charge de force et peut être défléchi dans la direction radiale.

3. Palier lisse axial-radial (1) selon la revendication 1 ou 2, **caractérisé en ce que** l'élément de verrouillage (8) présente une surface de verrouillage en forme de boule ou de cylindre au moins en sections, laquelle surface de verrouillage, dans une position de verrouillage de l'élément de verrouillage (8), correspondant à l'au moins un évidement de verrouillage (9) avec une surface de verrouillage de l'évidement de verrouillage configurée de manière complémentaire au moins en sections.

4. Palier lisse axial-radial (1) selon la revendication 1, 2 ou 3, **caractérisé en ce que** la deuxième bague de roulement (4) a deux sections de bague espacées axialement (41a, b) qui sont reliées par une bride axiale (42), la première bague de roulement (2) étant disposée entre les deux sections de bague espacées axialement (41a, b) de la deuxième bague de roulement (4) au moins en sections.

5. Palier lisse axial-radial (1) selon l'une quelconque des revendications 1 à 4, **caractérisé en ce que** l'élément de verrouillage (8) est en une ou plusieurs pièces et s'étend sur plus de la moitié de la dimension axiale de la bague de roulement ayant la plus petite étendue axiale.

6. Palier lisse axial-radial (1) selon l'une quelconque des revendications 1 à 5, **caractérisé en ce qu'**un ressort (80) est prévu pour appliquer une force à l'élément de verrouillage (8), lequel ressort est disposé dans un alésage (22), en particulier un alésage radial, de l'une des deux bagues de roulement et est serré entre l'élément de verrouillage (8) et un élément de butée radial tel qu'une vis (81) .

7. Palier lisse axial-radial (1) selon l'une quelconque des revendications 1 à 6, **caractérisé en ce que** l'autre des deux bagues de roulement présente une pluralité d'évidements de verrouillage (9) mutuellement espacés dans la circonférence pour recevoir successivement l'élément de verrouillage (8) lors de la rotation des deux bagues de roulement (2, 4) l'une par rapport à l'autre.

8. Palier lisse axial-radial (1) selon l'une quelconque des revendications 1 à 7, **caractérisé en ce que** le siège (7) pour l'élément de verrouillage (8) est formé sur l'une des deux bagues de roulement, pour recevoir presque complètement l'élément de verrouillage (8) dans les positions de fonctionnement relatives des deux bagues de roulement (2, 4) l'une par rapport à l'autre en dehors d'une position de verrouillage.

9. Palier lisse axial-radial (1) selon l'une quelconque des revendications 1 à 8, **caractérisé en ce que** l'au moins un évidement de verrouillage (9) est disposé sur la deuxième bague de roulement (4) et que le siège (7) de l'élément de verrouillage est disposé sur la première bague de roulement (2) .

10. Palier lisse axial-radial (1') selon l'une quelconque des revendications 1, 2, 4, 7, 8 et 9, dans la mesure où il comprend la caractéristique ii), **caractérisé en ce qu'**un dispositif d'actionnement (90) est disposé sur l'une des deux bagues de roulement, le dispositif d'actionnement ayant une section d'actionnement (92) mobile sur cette bague de roulement (2'), laquelle section d'actionnement étant en liaison fonctionnelle avec l'élément de verrouillage (8').

11. Palier lisse axial-radial (1') selon la revendication 10, **caractérisé en ce que** le dispositif d'actionnement (90) est conçu et configuré pour appliquer, par l'intermédiaire de la section d'actionnement (92), une force à l'élément de verrouillage, laquelle force agit contre l'application de la force à l'élément de verrouillage (8') afin de libérer le verrouillage de l'élément de verrouillage (8') et de l'au moins un évidement de verrouillage (9').

12. Palier lisse axial-radial (1') selon la revendication 10 ou 11, **caractérisé en ce que** la section d'actionnement (92) du dispositif d'actionnement est agencée de manière à pouvoir être déviée radialement vers l'une des deux bagues de roulement.

13. Palier lisse axial-radial (1') selon l'une quelconque des revendications 10, 11 ou 12, **caractérisé en ce que** l'élément de verrouillage (8') et la section d'actionnement (92) sont en liaison fonctionnelle par l'intermédiaire d'un élément ou d'une section de transmission de force du dispositif d'actionnement (90).

14. Palier lisse axial-radial (1') selon l'une quelconque des revendications 10 à 13, **caractérisé en ce que** le dispositif d'actionnement (90) est conçu et configuré pour verrouiller une position de fonctionnement dans laquelle un verrouillage de l'élément de verrouillage (8') dans l'au moins un évidement de verrouillage (9') est libéré.

15. Palier lisse axial-radial (1') selon la revendication 14, **caractérisé en ce que** la section d'actionnement (92), pour libérer le verrouillage d'une position de verrouillage de l'élément de verrouillage (8'), est conçue pour être déplacée de force dans une direction radiale par rapport à l'une des deux bagues de roulement (2', 4') sur un seuil de distance prédéterminé et, après avoir dépassé le seuil de distance, est conçue pour être rotative autour d'une direction radiale pour établir une fermeture de forme radiale entre la section d'actionnement (92) et l'une des deux bagues de roulement (2').

16. Palier lisse axial-radial (1) selon l'une quelconque des revendications 1 à 15, **caractérisé en ce qu'**un amincissement du matériau à la manière d'une charnière de film (65) est prévu entre les surfaces de glissement radiales et axiales des éléments de glissement respectifs (6) pour couder les surfaces de glissement radiales et axiales d'un élément de glissement (6) d'environ 90°.

17. Palier lisse axial-radial (1) selon l'une quelconque des revendications 1 à 16, **caractérisé en ce qu'**un élément de glissement (6) comprend, au niveau de ses surfaces de glissement axial, une pluralité de premiers secteurs (60) disposés essentiellement sans espace et se succédant sur la circonférence, tandis que l'élément de glissement (6) comprend, au niveau de ses surfaces de glissement radial, une pluralité de seconds secteurs (64) espacés mutuellement sur la circonférence et se succédant sur la circonférence.

18. Palier lisse axial-radial (1) selon l'une quelconque des revendications 1 à 17, **caractérisé en ce qu'**il comprend au moins deux éléments de glissement (6) qui, en position installée, sont décalés axialement par rapport à leur surface de glissement axial d'environ la dimension axiale de la première bague de roulement (2) et, en particulier, sont disposés de manière décalée circonférentiellement l'un par rapport à l'autre d'environ la moitié de la dimension circonférentielle des premiers secteurs (60).

19. Palier lisse axial-radial (1) selon l'une quelconque des revendications 10 à 18, **caractérisé en ce que** le dispositif d'actionnement comprend un actionneur contrôlable pour régler et/ou libérer de manière non manuelle le verrouillage de l'élément de verrouillage dans l'au moins un évidement de verrouillage.

20. Palier lisse axial-radial (1) selon l'une quelconque des revendications 10 à 19, **caractérisé en ce que** la section d'actionnement comprend un dispositif d'accouplement mécanique tel qu'un filetage de boulon ou un filetage femelle pour l'accouplement à un élément de réglage.

21. Palier lisse axial-radial (1) selon l'une quelconque des revendications 1 à 20, **caractérisé par** un dispositif de surveillance pour la détection des états verrouillés et/ou non verrouillés du palier lisse axial-radial (1).
